(19) Europäisches Patentamt
European Patent Office
Office européen des brevets

(11) **EP 4 092 419 B1**

(12) **EUROPEAN PATENT SPECIFICATION**

(45) Date of publication and mention
of the grant of the patent:
**18.03.2026  Bulletin 2026/12**

(51) International Patent Classification (IPC):
***G01N 35/00*** *(2006.01)*      ***G01N 35/10*** *(2006.01)*

(21) Application number: **20913111.9**

(52) Cooperative Patent Classification (CPC):
**G01N 35/00613; G01N 35/1004;** G01N 2035/00326;
G01N 2035/00534; G01N 2035/00891

(22) Date of filing: **09.12.2020**

(86) International application number:
**PCT/JP2020/045937**

(87) International publication number:
**WO 2021/145108 (22.07.2021 Gazette 2021/29)**

(54) **AUTOMATED ANALYZER**

AUTOMATISIERTER ANALYSATOR

ANALYSEUR AUTOMATISÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **16.01.2020   JP 2020005439**

(43) Date of publication of application:
**23.11.2022   Bulletin 2022/47**

(73) Proprietor: **Hitachi High-Tech Corporation
Minato-ku
Tokyo 105-6409 (JP)**

(72) Inventors:
• **YOKOTA Yuki
Tokyo 105-6409 (JP)**
• **SASAKI Shunsuke
Tokyo 105-6409 (JP)**
• **IMAI Kenta
Tokyo 105-6409 (JP)**
• **OKUSA Takenori
Tokyo 105-6409 (JP)**

(74) Representative: **Strehl & Partner mbB
Maximilianstrasse 54
80538 München (DE)**

(56) References cited:
JP-A- 2017 151 002      KR-A- 20040 006 954
KR-A- 20110 104 281     US-A1- 2009 133 511
US-A1- 2014 296 089     US-A1- 2017 065 970

## Description

The present invention relates to an automatic analyzer.

## Background Art

In a clinical inspection in which qualitative or quantitative analysis of components contained in biological samples such as blood and urine or the like of patients is performed, there is known an automatic analyzer which automates a series of inspection steps. The automatic analyzer generally includes various processing units such as a plurality of dispensing mechanisms for separating a predetermined amount of sample and reagent from a container to a reaction vessel, a stirring mechanism, and a cleaning mechanism.

In the inspection in the automatic analyzer, the sample and the reagent are aspirated by the sample dispensing mechanism and the reagent dispensing mechanism and discharged toward the reaction vessel (in the present specification, the sample dispensing mechanism and the reagent dispensing mechanism may be collectively referred to as a "dispensing mechanism"). Further, stirring or the like is performed by the stirring mechanism so that the sample and the reagent chemically react with each other. Then, the reaction liquid is sent to a detector to perform various inspections. After that, the dispensing mechanism undergoes a cleaning operation in a cleaning tank and executes a moving operation between the above operations.

The operations such as aspiration, discharge, stirring, and cleaning in each processing unit as described above are performed according to the design values, that is, the above operations have to be appropriately adjusted in order to ensure the analysis performance of the automatic analyzer. For example, in order to prevent the carry-on of reagents between different samples, it is necessary that the dispensing mechanism is cleaned with an appropriate amount of cleaning water. Further, in terms of ensuring the accuracy of a dispensing amount, it is important to accurately adjust the position of a nozzle of the dispensing mechanism.

Patent Literature 1 discloses an automatic analyzer capable of capturing an aspiration operation, a discharge operation, and a cleaning operation of a sample dispensing mechanism and a reagent dispensing mechanism by a camera (imaging unit) as a method for confirming the operation of a nozzle.

The document US20140296089A1 discloses an automatic analyzer according to the preamble of claim 1.

However, the device of Patent Literature 1 adopts a camera for each of the plurality of dispensing mechanisms. Therefore, in order to confirm the operations of the nozzles of the plurality of dispensing mechanisms in one device, a plurality of cameras are required. Increasing in the number of cameras leads to an increase in the manufacturing cost of the device.

## Citation List

### Patent Literature

PTL 1: Japanese Unexamined Patent Application Publication No. 2017-151002

## Summary of Invention

### Technical Problem

The present invention aims to provide an automatic analyzer capable of measuring operations in a plurality of processing units and ensuring analysis performance while suppressing an increase in manufacturing cost.

### Solution to Problem

In order to solve the above problems, an automatic analyzer according to the present invention is defined by claim 1 and includes a plurality of processing units which execute operations related to analysis, wherein the processing units have a rod-shaped member which comes into contact with liquid, a plurality of measuring instrument mounting units which are arranged in each of the plurality of processing units and configured to allow a measuring instrument to be mounted, said measuring unit measuring each of the operations of the plurality of processing units, and a control unit which controls the plurality of processing units. Each of the plurality of measuring instrument mounting units is configured to allow the measuring instrument to be removed and configured to allow the removed measuring instrument to be mounted to another measuring instrument mounting unit, wherein the measuring instrument mounting unit is arranged so that the measuring instrument is capable of measuring a stop position of the rod-shaped member.

**Advantageous Effects of Invention**

According to the present invention, there can be provided an automatic analyzer capable of measuring operations in a plurality of processing units and ensuring analysis performance while suppressing an increase in manufacturing cost.

**Brief Description of Drawings**

Fig. 1 is a schematic configuration view of an automatic analyzer 100 according to a first embodiment.

Fig. 2 is a schematic plan view describing the outline of a configuration of a reagent dispensing mechanism 110 according to the first embodiment.

Fig. 3 is a schematic plan view describing the outline of a configuration of a stirring paddle drive mechanism 112 according to the first embodiment.

Fig. 4 is a schematic plan view describing the outline of a configuration of a reaction liquid aspiration mechanism 116 according to the first embodiment.

Fig. 5 is a schematic plan view describing the outline of a configuration of a sample dispensing mechanism 117 according to the first embodiment.

Fig. 6 is a schematic plan view describing the outline of a configuration of a BF separation mechanism 118 according to the first embodiment.

Fig. 7 is a schematic perspective view describing a configuration of a cleaning mechanism W1 and a measuring instrument mounting unit BX1 provided in the reagent dispensing mechanism 110.

Fig. 8 is a view showing an example of an image in the case where a cleaning tank 606 and a background image plate 800 are photographed.

Fig. 9 is a view showing an example of an image in the case where cleaning liquid (803) of an appropriate amount of water (according to a designed value) is discharged toward a nozzle NZ1.

Fig. 10 is a view showing an example of an image in the case where the amount of water in the cleaning liquid (803) is extremely small compared to a design value.

Fig. 11 is a view showing an example of an image in the case where the amount of water in the cleaning liquid (803) is excessive compared to a design value.

Fig. 12 is a flowchart of an operation of measuring and adjusting the amount of cleaning water in a plurality of cleaning mechanisms W1 to 5 according to the first embodiment.

Fig. 13 is a view showing an example of a guide drawing 900 displayed on a display unit 13 in Step S102 of Fig. 12.

Fig. 14 is a view showing an example of an instruction screen 910 which can be displayed in Step S111.

Fig. 15 is a view showing an example of the screen of an adjustment completion report (Step S119).

Fig. 16 is a view showing a first modification of the first embodiment.

Fig. 17 is a view showing a second modification of the first embodiment.

Fig. 18 is a view showing a third modification of the first embodiment.

Fig. 19 is a schematic configuration view of an automatic analyzer 100 according to a second embodiment.

Fig. 20 is a cross-sectional view showing a specific configuration example of a measuring instrument mounting unit BX42.

Fig. 21 is a view showing an example of an image obtained by photographing a specimen container 101 or the like.

Fig. 22 is a schematic configuration view of an automatic analyzer 100 according to a third embodiment.

Fig. 23 is a schematic configuration view of an automatic analyzer 100 according to a fourth embodiment.

Fig. 24 is a schematic configuration view of an automatic analyzer 100 according to a fifth embodiment.

Fig. 25 is a schematic configuration view of an automatic analyzer 100 according to a sixth embodiment.

Fig. 26 is a view showing an example of an image obtained by photographing the specimen container 101 or the like from above by a measuring instrument SS inserted in a measuring instrument mounting unit BX4u.

Fig. 27 is a schematic configuration view of an automatic analyzer 100 according to a seventh embodiment.

Fig. 28 is a schematic configuration view describing a comparative example of an eighth embodiment.

Fig. 29 is a schematic configuration view of an automatic analyzer 100 according to the eighth embodiment.

Fig. 30 is a flowchart in the case of performing the operation of adjusting the position of a rod-shaped member according to the second to eighth embodiments.

**Description of Embodiments**

Hereinafter, the present embodiment will be described with reference to the accompanying drawings. In the accompanying drawings, functionally identical elements may be represented by the same number or the corresponding number. Incidentally, the accompanying drawings show embodiments and implementation examples in accordance with the principle of the present disclosure, but these are for the purpose of understanding the present disclosure and are never used to interpret the present disclosure in a limited way. The description of the present specification is merely a typical example and does not limit the scope of claims or application examples of the present disclosure in any sense.

Although the present embodiment is described in sufficient detail for those skilled in the art to implement the present disclosure, it is necessary to understand that other implementations and forms are also possible, and that it is possible to change the configuration/structure and replace various elements without departing from the scope of the invention as defined in the claims. Therefore, the following description will not be construed as limited to this.

[Fist Embodiment]

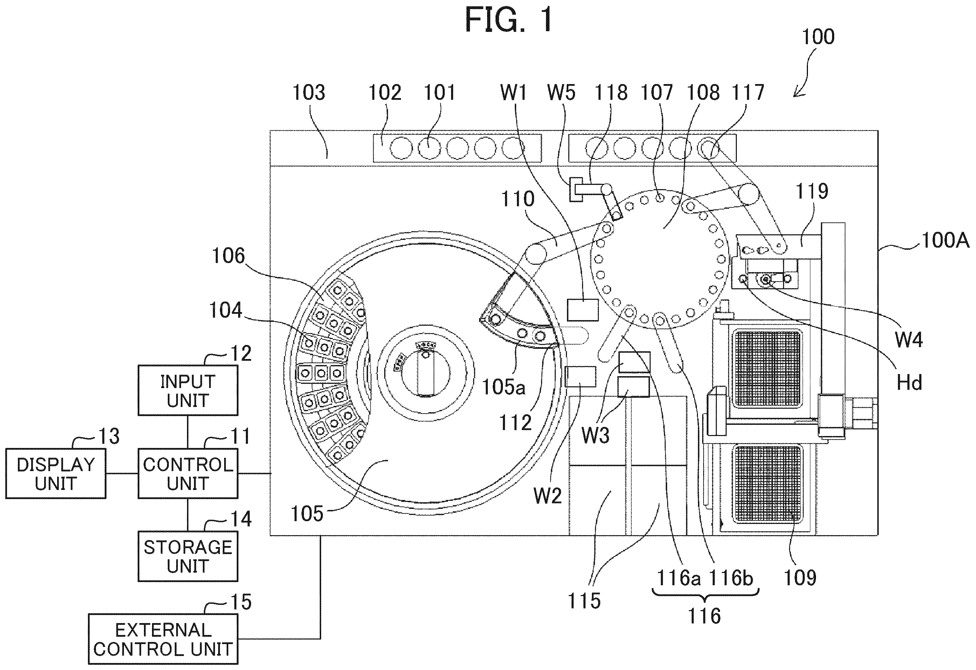

Fig. 1 is a schematic configuration view of an automatic analyzer 100 according to a first embodiment. As shown in Fig. 1, the automatic analyzer 100 includes a main body unit 100A, a control unit 11, an input unit 12, a display unit 13, a storage unit 14, and an external control unit 15.

The main body unit 100A includes various configurations for executing automatic analysis of a sample, as will be described later. The control unit 11 performs the entire control of the main body unit 100A. The input unit 12 is a device for inputting commands and various data from an operator to the control unit 11. The display unit 13 is a display device for displaying an analysis result of the sample and the like. The storage unit 41 is a storage device which stores computer programs and various data for controlling the control unit 11, and is, for example, hard disk drive or a semiconductor memory device. The external control unit 15 is an external electronic terminal such as a notebook computer or a tablet, and controls the main body unit 100A independently of the control unit 11.

The automatic analyzer 100 includes, in the main body unit 100A, a sample container rack 102, a rack transfer line 103, a reagent disk 106, and an incubator (reaction disk) 108.

The sample container rack 102 stores a plurality of sample containers 101 which store biological samples (hereinafter referred to as samples) such as blood and urine. The rack transfer line 103 is a transfer path which transfers the sample container rack 102. The reagent disk 106 is a disk-shaped container which houses the reagent container 104 therein and keeps it warm. Various reagents containing therein compounds, magnetic particles, etc. which react with specific components in the sample are stored in the reagent container 104. The inside of the reagent disk 106 is maintained at a predetermined temperature. The reagent reacts with the sample in a reaction vessel and is used for analysis of various samples. The surface of the reagent disk 106 is covered with a reagent disk cover 105. The reagent disk cover 105 is provided with an opening 105a for passing a reagent dispensing mechanism 110 to be described later. The incubator 108 is a disk-shaped container for accommodating a plurality of reaction vessels 107 for mixing a sample and a reagent. A reaction vessel holding unit 109 is a holding unit for storing an unused reaction vessel. Incidentally, the used reaction vessel 107 is discarded in a disposal hole Hd.

In addition to this, the automatic analyzer 100 includes, in the main body unit 100A, the reagent dispensing mechanism 110, a stirring paddle drive mechanism 112, a detection mechanism 115, a reaction liquid aspiration mechanism 116 (116a, 116b), a sample dispensing mechanism 117, a BF separation mechanism 118, and a reaction vessel transfer mechanism 119.

The reagent dispensing mechanism 110 is configured to be able to rotate and move up and down about its rotating axis. The reagent dispensing mechanism 110 aspirates the reagent held in the reagent container 104 in the reagent disk 106 and discharges the aspirated reagent into the reaction vessel 107 on the incubator 108. The stirring paddle drive mechanism 112 is a device for driving a paddle for stirring magnetic particles and the like in the reagent container 104. The detection mechanism 115 receives the supply of reaction liquid from the reaction vessel 107 via the reaction liquid aspiration mechanism 116 (116a, 116b) and performs the analysis of the sample. The detection mechanism 115 can be provided with a plurality of detection units arranged in parallel, and correspondingly, the reaction liquid aspiration mechanism 116 can also be provided with a plurality of aspiration units (for example, two aspiration units 116a and 116b). Incidentally, in the present specification, paddles and various nozzles are collectively referred to as "rod-shaped members".

The sample dispensing mechanism 117 aspirates the sample from the sample container 101 and discharges the sample toward the reaction vessel 107 arranged in the incubator 108. The BF separation mechanism 118 is a cleaning mechanism for supplying BF separation liquid to the reaction vessel 107 to perform pre-cleaning in order to clean unreacted components. The reaction vessel transfer mechanism 119 is a three-axis transfer mechanism capable of moving in three directions of an X-axis, a Y-axis, and a Z-axis and grips the reaction vessel 107 to transfer the reaction vessel 107 to a predetermined position.

Further, the cleaning mechanisms W1 to W5 are provided as devices for cleaning the reagent dispensing mechanism 110, the stirring paddle drive mechanism 112, the reaction liquid aspiration mechanism 116, the sample dispensing mechanism 117, and the BF separation mechanism 118.

These cleaning mechanisms W1 to W5 are respectively provided with a measuring instrument for measuring the operation of the cleaning mechanisms W1 to S5, for example, a camera. In addition, each of the cleaning mechanisms W1 to W5 includes a measuring instrument mounting unit (BX) to which the measuring instrument SS can be installed to be freely inserted and removed. The measuring instrument SS is movable from one measuring instrument mounting unit to another measuring instrument mounting unit. The measuring instrument SS can be shared among a plurality of measuring instrument mounting units, whereby the number of the measuring instruments SS can be reduced and the manufacturing cost can be suppressed. Incidentally, in the following description, when the measuring instrument mounting units are taken as a generic term, they may be referred to as a "measuring instrument mounting unit BX". When individual measuring instrument mounting units provided in one processing unit are referred to, they may be referred to as a "measuring instrument mounting unit BXi" with a number attached thereto.

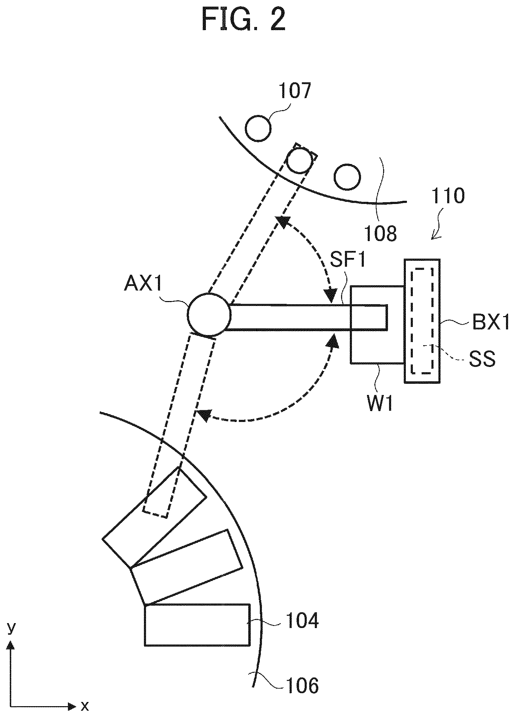

Fig. 2 is a schematic plan view describing the outline of a configuration of the reagent dispensing mechanism 110. The reagent dispensing mechanism 110 includes a rotating axis AX1, a shaft SF1 which rotates about the rotating axis AX1, and a nozzle NZ1 (not shown in Fig. 2) attached to the tip of the shaft SF1. The cleaning mechanism W1 is arranged at a passing position of the nozzle NZ1 and cleans the nozzle NZ1 which has finished the dispensing operation. By the shaft SF1 of the reagent dispensing mechanism 110 being rotated about the rotating axis AX1, the cleaning operation of the nozzle NZ1 in the cleaning mechanism W1 by the cleaning liquid, the aspiration operation of the reagent in the reagent disk 106, and the discharging operation of the reagent on the incubator 108 are repeated. With such an operation, when the dispensing of the next reagent is started after the dispensing of a certain reagent, the reagent used in the previous measurement is removed by cleaning, and hence contamination is suppressed. This cleaning mechanism W1 includes a measuring instrument mounting unit BX1 to which a measuring instrument SS (here, as an example, a camera capable of photographing the state of cleaning) for measuring the cleaning state can be installed. Incidentally, the reagent dispensing mechanism 110 is also configured to be vertically movable by an unillustrated vertically moving mechanism.

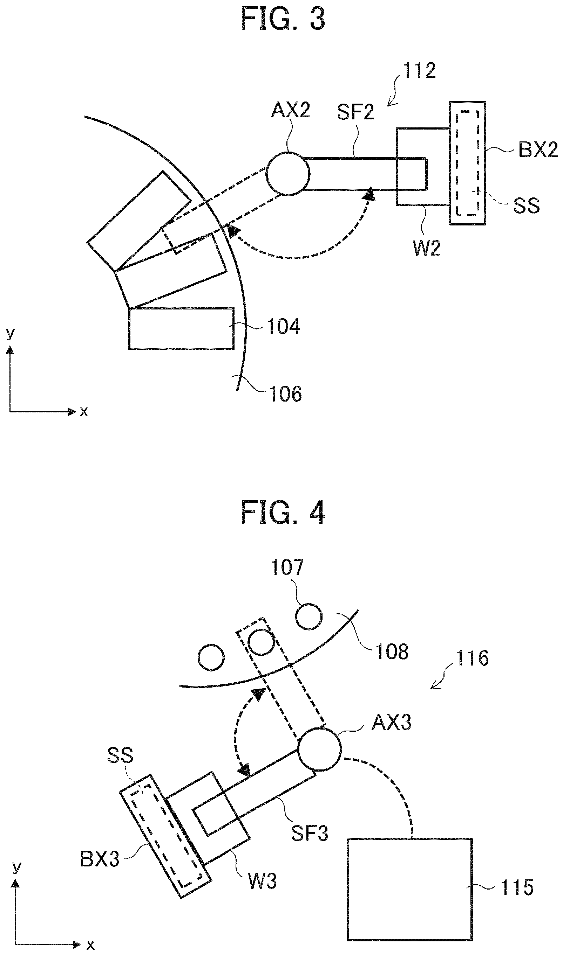

Fig. 3 is a schematic plan view describing the outline of a configuration of the stirring paddle drive mechanism 112. The stirring paddle drive mechanism 112 includes a rotating axis AX2, a shaft SF2 which rotates about the rotating axis AX2, and a stirring paddle (not shown in Fig. 3) attached to the tip of the shaft SF2. The cleaning mechanism W2 is arranged at a position where the stirring paddle passes, and cleans the stirring paddle after the stirring operation is completed.

In the stirring paddle drive mechanism 112, the shaft SF2 is rotated about the rotating axis AX2 so that a cleaning operation of the stirring paddle with cleaning liquid and a stirring operation of magnetic particles precipitated in the reagent container 104 installed on the reagent disk 106 are repeated. Further, the cleaning mechanism W2 includes a measuring instrument mounting unit BX2 to which a measuring instrument SS for measuring the state of cleaning can be mounted. The measuring instrument mounting unit BX1 can be provided with the measuring instrument SS so that it can be freely inserted and removed, and can be used with being mounted with the measuring instrument SS removed from the other measuring instrument mounting unit. Incidentally, the stirring paddle drive mechanism 112 is also configured to be able to move up and down by an unillustrated vertical movement mechanism.

Fig. 4 is a schematic plan view describing the outline of a configuration of the reaction liquid aspiration mechanism 116. Since the two reaction liquid aspiration mechanisms 116a and 116b have the same structure, only one of them is illustrated in Fig. 4. The reaction liquid aspiration mechanism 116 includes a rotating axis AX3, a shaft SF3 which rotates about the rotating axis AX3, and a nozzle (not shown) attached to the tip of the shaft SF3. The reaction liquid aspirated from the reaction vessel 107 by the reaction liquid aspiration mechanism 116 is sent to the detection mechanism 115 via a reaction liquid aspiration flow path. A cleaning mechanism W3 is arranged at a passing position of the nozzle. The nozzle is cleaned in the cleaning mechanism W3 by the shaft SF3 being rotated about the rotating axis AX3.

The cleaning mechanism W3 includes a measuring instrument mounting unit BX3 to which a measuring instrument SS for measuring the state of cleaning can be mounted. The measuring instrument mounting unit BX3 can be provided with the measuring instrument SS so that it can be freely inserted and removed, and can be used with being mounted with the measuring instrument SS removed from the other measuring instrument mounting unit. Incidentally, the reaction liquid aspiration mechanism 116 is configured to be vertically movable by an unillustrated vertical movement mechanism.

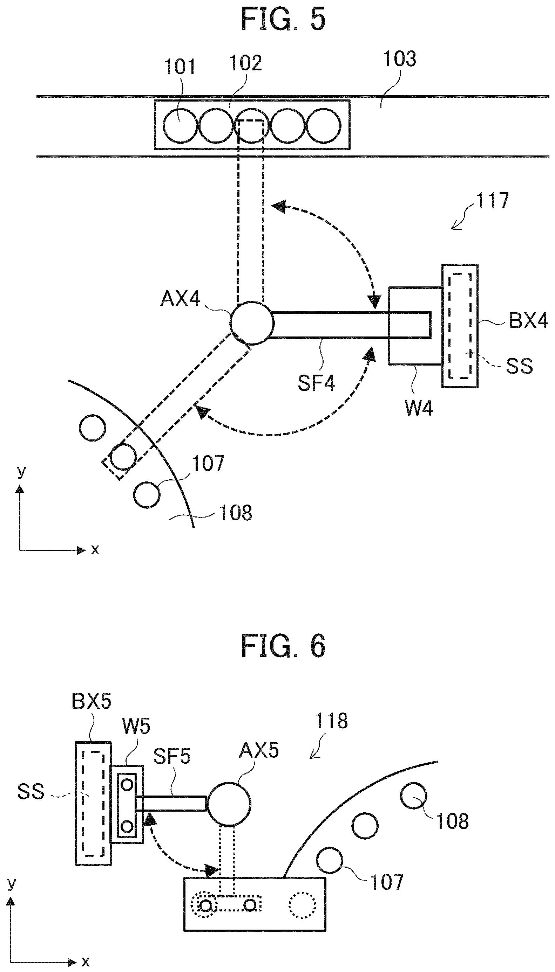

Fig. 5 is a schematic plan view describing the outline of a configuration of the sample dispensing mechanism 117. The sample dispensing mechanism 117 includes a rotating axis AX4, a shaft SF4 which rotates about the rotating axis AX4, and a nozzle (not shown in Fig. 5) attached to the tip of the shaft SF4. The cleaning mechanism W4 is arranged at a position where the nozzle passes, and cleans the nozzle after the sample dispensing operation is completed. By the shaft SF4 being rotated about the rotating axis AX4, the cleaning operation in the cleaning mechanism W4, the operation of aspirating the sample from within the sample container 101, and the operation of discharging the sample to the reaction vessel 107 installed on the incubator 108 are repeated. After the dispensing of a certain sample is completed, the cleaning mechanism W4 performs a cleaning operation in order to prevent contamination due to mixing of the previous sample when the next sample is dispensed.

The cleaning mechanism W4 includes a measuring instrument mounting unit BX4 to which a measuring instrument SS for measuring the state of cleaning can be mounted. The measuring instrument mounting unit BX4 can be provided with the measuring instrument SS so that it can be freely inserted and removed, and can be used with being mounted with the measuring instrument SS removed from the other measuring instrument mounting unit.

Fig. 6 is a schematic plan view describing the outline of a configuration of the BF separation mechanism 118. The BF separation mechanism 118 includes a rotating axis AX5, a shaft SF5 which rotates about the rotating axis AX5, and a nozzle (not shown in Fig. 6) attached to the tip of the shaft SF5.

The cleaning mechanism W5 is arranged at a position where the nozzle passes, and cleans the nozzle after a BF separation operation is completed. The cleaning mechanism W5 includes a measuring instrument mounting unit BX5 to which a measuring instrument SS for measuring the state of cleaning can be mounted. The measuring instrument mounting unit BX5 can be provided with the measuring instrument SS so that it can be freely inserted and removed, and can be used with being mounted with the measuring instrument SS removed from the other measuring instrument mounting unit.

Incidentally, in Figs. 2 to 6, various nozzles and paddles have been described as the structure that rotates about the rotating axis, but the present disclosure is not limited to this, and such a three-axis drive mechanism that the nozzles and paddles move in orthogonal three-axis directions may be adopted. Further, there may be adopted such a configuration that the reaction liquid aspiration mechanism 116 is fixed, and instead, the reaction vessel 107 is moved to the reaction liquid aspiration mechanism 116 side by an unillustrated actuator.

As shown in Figs. 2 to 6, in the first embodiment, a plurality of processing units (for example, reagent dispensing mechanism 110, stirring paddle drive mechanism 112, reaction liquid aspiration mechanism 116, sample dispensing mechanism 117, and BF separation mechanism 118) are arranged with the measuring instrument mounting units BX1 to 5 respectively, and can be mounted with the measuring instruments SS (camera or the like) respectively. The measuring instrument SS may be installed in a predetermined measuring instrument mounting unit when inspecting the operation of each processing unit, and can be removed and moved to another measuring instrument mounting unit after the inspection is finished. Therefore, according to the first embodiment, one measuring instrument SS can be shared among the plurality of processing units, and hence the number of measuring instruments SS can be reduced. This leads to a reduction in the manufacturing cost of the device.

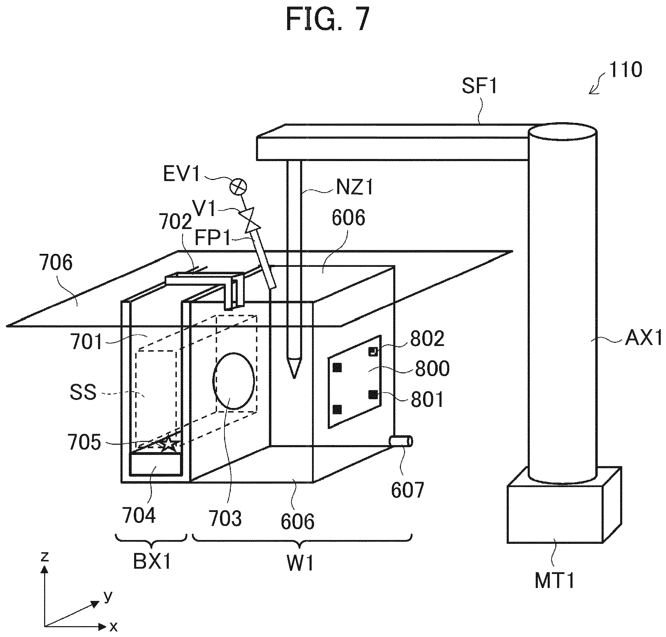

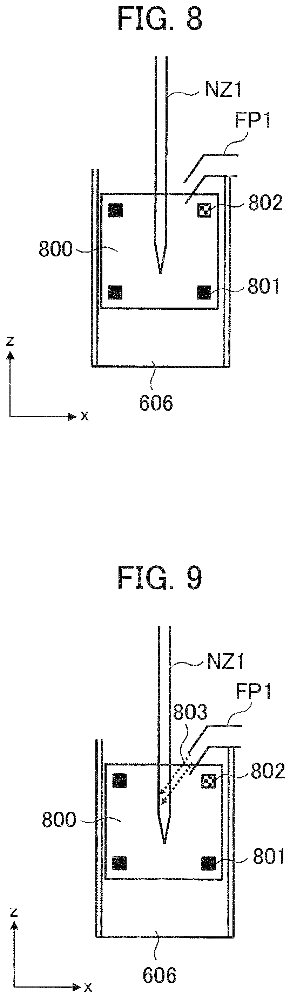

Specific configuration examples of the cleaning mechanisms W1 to W5 and the measuring instrument mounting units BX1 to BX5 will be described with reference to Figs. 7 and 8. Fig. 7 is a schematic perspective view describing the configurations of the cleaning mechanism W1 and the measuring instrument mounting unit BX1 provided in the reagent dispensing mechanism 110. Incidentally, any of the configurations of the cleaning mechanisms W1 to W5 may be approximately the same, and any of the configurations of the measuring instrument mounting units BX1 to BX5 may be approximately the same. Therefore, only the configurations of the cleaning mechanism W1 and the measuring instrument mounting unit will be described with reference to the drawings.

As described above, the reagent dispensing mechanism 110 includes a rotating axis AX1, a shaft SF1, and a nozzle NZ1. The rotating axis AX1 rotates and moves up and down by a driving force of an actuator MT1.

The cleaning mechanism W1 is mainly comprised of a flow path FP1 through which cleaning liquid such as pure water flows, a water amount adjusting valve V1 which adjusts the amount of water in the flow path FP1, an electromagnetic valve EV1 which opens and closes the flow path under control from the control unit 11, a cleaning tank 606 which receives the discharged cleaning liquid, and a waste liquid pipe 607 which drains the cleaning liquid. Incidentally, if there is provided the water amount adjusting valve V1 having an actuator, the opening/closing amount and the amount of water may be adjusted by the control unit 11. Incidentally, a sensor window 703 is provided on one side surface of the cleaning tank 606, and the above-described measuring instrument SS is arranged in the sensor window 703. The sensor window 703 can be comprised of, for example, an acrylic plate or the like.

The measuring instrument mounting unit BX1 is arranged adjacent to the cleaning mechanism W1 and has a structure covered by a device cover 706. As an example, the measuring instrument mounting unit BX1 includes a measuring instrument accommodating unit 701, a lock mechanism 702, a measuring instrument sensor 704, and an identification label 705.

The measuring instrument accommodating unit 701 is a housing in which the internal measuring instrument SS is mounted, and its mounting position can be adjusted by an unillustrated adjustment mechanism. The lock mechanism 702 is a mechanism for fixing the measuring instrument SS mounted inside the measuring instrument accommodating unit 701. The measuring instrument sensor 704 is a sensor which detects whether or not the measuring instrument SS is mounted in the measuring instrument accommodating unit 701. A detection method of the measuring instrument sensor 704 does not matter as long as the presence of SS of the measuring instrument can be detected, but for example, a pressure sensor, an optical sensor, a Hall sensor, a weight sensor, a light sensor, a proximity sensor, etc. can be utilized as the measuring instrument sensor 704. The identification label 705 is installed for the purpose of easily identifying a desired measuring instrument mounting unit from the measuring instrument mounting units BX1 to 5 being provided in plural on the automatic analyzer 100. An LED light may be provided instead of the identification label 705, and the control unit 11 may instruct the LED light of the desired measuring instrument mounting unit to blink.

When the measuring instrument SS is a camera, the images of the inside of the cleaning tank 606 and the background image plate 800 can be measured or photographed through the sensor window 703. The image of the inside of the cleaning tank 606 can be taken with the background image of the background image plate 800 as the background. Incidentally, when connecting the camera to an external device by wire, the measuring instrument mounting unit BX1 may be provided with a connector or a terminal.

The background image plate 800 is described with a positioning mark 801 for correcting the mounting position of the measuring instrument SS and adjusting the position of a nozzle or the like, and a machine-readable text 802 (for example, one-dimensional or two-dimensional code) including device information such as a serial number and an adjustment point. The plurality of measuring instrument mounting units BX1 to 5 are provided on the automatic analyzer 100, and different adjustment criteria are prepared for the respective measuring instrument mounting units BX1 to 5. Therefore, there is a concern that a user mistakenly mounts the measuring instrument SS in another measuring instrument mounting unit and adjusts it with a different adjustment criterion by an automatic adjustment tool to be described later. Therefore, by reading the machine-readable text 802, the control unit 11 confirms that the measuring instrument SS is correctly mounted in the desired measuring instrument mounting unit. Incidentally, when a proximity wireless technology such as RFID including device information is used instead of the measuring instrument sensor 704, the machine-readable text 802 of the background image is unnecessary.

When the measuring instrument SS is a camera, the camera can be configured of a lens, an image sensor (image element), a control unit which controls them, and a communication unit. By wired or wireless connection, it is possible to connect to the control unit 11 or the external control unit 15 of the automatic analyzer 100 and transfer an image taken by the camera to the outside. Incidentally, as the camera, a general-purpose electronic terminal having a lens and an imaging element, such as a smartphone or a digital camera may be used. Also, the measuring instrument SS may be a CCD camera, an infrared camera, or the like instead of the general-purpose camera. Further, the measuring instrument SS may be an optical sensor, a linear image sensor, or the like instead of the camera. In addition, instead of the camera, a measuring instrument capable of measuring a length can also be adopted. Incidentally, when the measuring instrument SS is of a camera, its image sensor (for example, CCD) preferably has an adjustment accuracy of about 0.1mm. Assuming that a visual field size in the y-axis direction is about 30mm, the adjustment accuracy can be calculated from the following equation 1.

$$\text{Pixel resolution} = \text{Y-direction visual field size (mm)/Number of pixels in y- direction of CCD} \qquad \text{(Equation 1)}$$

Since the general-purpose CCD has about 310,000 pixels (Y = 480 pixels), the pixel resolution becomes 0.0625 mm/pixel, and the adjustment accuracy of about 0.1mm can be sufficiently obtained. Further, if there is provided a CCD larger than the above in the number of pixels, the adjustment accuracy can be further improved.

Fig. 8 shows an example of an image when the cleaning tank 606 and the background image plate 800 are photographed by using the camera as the measuring instrument SS mounted in the measuring instrument mounting unit BX1 in the configuration of FIG. 7. The camera can simultaneously capture the nozzle NZ1 of the reagent dispensing mechanism 110, the positioning mark 801 of the background image plate 800, and the machine-readable text 802. By grasping the positional relationship between the positioning mark 801 and the nozzle NZ1 in the image, it is possible to grasp whether or not the nozzle NZ1 is in an appropriate position. Further, it is possible to determine from the image of the discharged cleaning liquid (803) whether or not the cleaning liquid is properly discharged from the flow path FP1 toward the nozzle NZ1.

Fig. 9 shows an example of an image displayed on the display unit 13 when cleaning liquid (803) having an appropriate amount of water (according to the design value) is discharged toward the nozzle NZ1. In FIG. 9, it is determined that all the cleaning liquid (803) are discharged toward the nozzle NZ1, from the relative position of each cleaning liquid (803) to the nozzle NZ1 and the shape of its image. Hereinafter, the relative position of the cleaning liquid (803) to the nozzle NZ1, the liquid amount of the cleaning liquid judged from the image, and other physical quantity criteria such as the shape and feature amount of the image are referred to as "predetermined criteria".

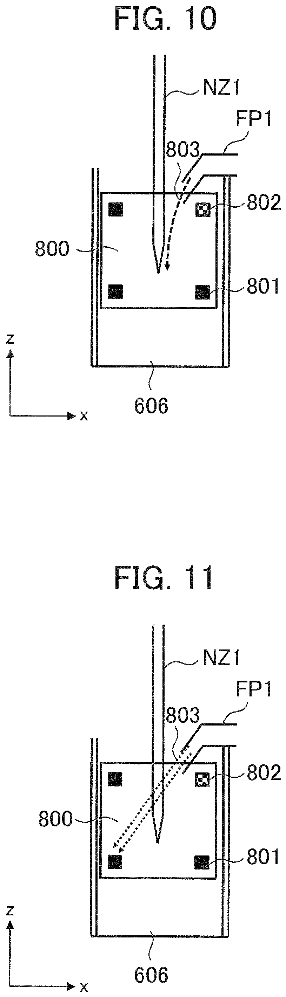

On the other hand, Fig. 10 shows an example of an image when the amount of water in the cleaning liquid (803) is too small compared to the design value. In Fig. 10, there is obtained an image showing that a part of the cleaning liquid (803) does not reach the nozzle NZ1 of the reagent dispensing mechanism 110 and falls downward. In this case, it can be determined that the cleaning liquid is too small compared to the design value. In this case, the nozzle NZ1 cannot be sufficiently cleaned, and the reagent may be carried over between the reagent containers, resulting in deterioration of the analysis performance.

Fig. 11 shows an example of an image when the amount of water in the cleaning liquid (803) is excessive compared to the design value. In Fig. 11, the discharge angle is deviated due to the excessive amount of water in the cleaning liquid, and hence the cleaning liquid is not correctly applied to the nozzle NZ110. In this case, there is a possibility that the cleaning liquid is consumed wastefully, the amount of cleaning water brought into the reagent container increases, and the reagent in the reagent container is diluted.

Thus, according to the configuration of the first embodiment, the measuring instrument SS (for example, the camera) is mounted in the measuring instrument mounting unit BX1, whereby it is possible to measure the state of cleaning by the cleaning mechanism W1 and judge the suitability of cleaning. Since the measuring instrument SS can be sequentially inserted into and used in the plurality of measuring instrument mounting units BX1 to 5, one measuring instrument SS can be shared among the plurality of cleaning mechanisms W1 to 5, whereby it is possible to reduce the manufacturing cost of the device. Further, there are also effects such as an improvement in accuracy by adjustment work using a measuring instrument, suppression of variations in adjustment by a device and an adjustment worker, and shortening of an adjustment time.

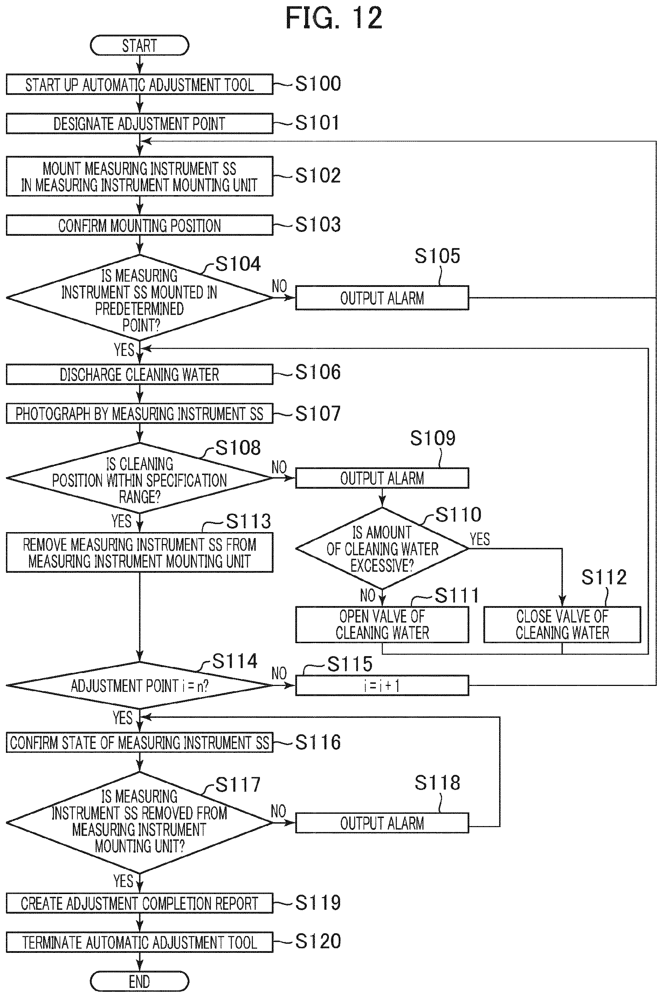

Fig. 12 is a flowchart of an operation in which measuring instruments SS are sequentially mounted (moved) in a plurality of cleaning mechanisms W1 to 5 each provided with a measuring instrument mounting unit 201 to measure and adjust the amount of cleaning water in the plurality of cleaning mechanisms W1 to 5. The operation of this flowchart is executed according to the automatic adjustment tool for automatically adjusting the operations of the cleaning mechanisms W1 to 5, which is stored in the storage unit 14.

First, the user inputs a command for starting up the automatic adjustment tool stored in the storage unit 14 via the input unit 12 (Step S100). The automatic analyzer 100 stores various software such as a measurement execution tool for executing a normal measurement operation, a test tool for confirming the operation of each mechanism, and a maintenance tool for executing a maintenance operation in the storage unit 14. The automatic adjustment tool is a tool that executes the following Steps S101 to 119, and may be incorporated in system software, may be incorporated in the adjustment software installed in the external control unit 11, or may be single software.

When the automatic adjustment tool is started up, the user selects the cleaning mechanisms W1 to 5 to be adjusted from the input unit 12. Further, the control unit 11 calculates adjustment points (n points) and stores the result of its calculation in the storage unit 14 (Step S101).

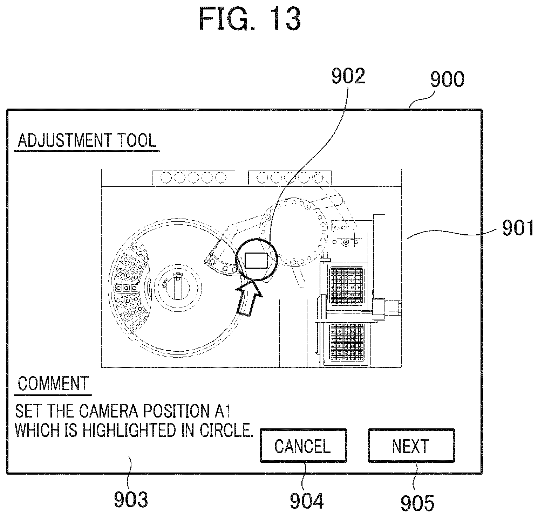

Next, the control unit 11 instructs the user to mount the measuring instrument SS in the predetermined measuring instrument mounting unit BX1 (Step S102). For example, such a guidance screen (its details will be described later) as shown in Fig. 13 can be displayed on the display unit 13 to indicate the position of the measuring instrument mounting unit in which the measuring instrument SS should be mounted. The user mounts the measuring instrument SS into the predetermined measuring instrument mounting unit BX1 according to this indication.

At this time, in order to prevent the measuring instrument SS from being attached to an erroneous place, the control unit 11 reads the machine-readable text 802 from the background image plate 800 and confirms the position where the measuring instrument SS should be mounted (Step S103). When the measuring instrument mounting unit BX1 and the measuring instrument SS are connected by proximity wireless communication such as RFID or a connector, the control unit 11 is capable of reading information of the measuring instrument mounting unit BX1 via the proximity wireless communication or the connector.

Next, the control unit 11 determines whether or not the information of the mounting position read in Step S103 and the mounting position on the automatic adjustment tool match (Step S104). Incidentally, when the measuring instrument SS is installed in the measuring instrument mounting unit BX1 which is not planned, or when the machine-readable text 802 cannot be read, the control unit 11 outputs an alarm to the display unit 13 (Step S105).

When it can be confirmed that the measuring instrument SS is mounted in a predetermined position (YES in Step S104), the control unit 11 opens the electromagnetic valve EV1 and performs a cleaning step of discharging the cleaning liquid from the flow path FP toward the nozzle NZ1 (Step S106). Then, the measuring instrument SS (camera) measures or photographs the cleaning step, and stores a measurement result or an image in the storage unit 14 (Step S107).

Subsequently, the control unit 11 determines from the measurement result or the photographed image whether or not the amount of water in the cleaning liquid from the cleaning mechanism W1 is within the range of the "predetermined criterion" (Step S108). At this time, it is possible to correct an error in the mounting position of the measuring instrument SS, based on the position of the positioning mark 801 of the background image plate 800. The determination method in Step S108 may be a method using image processing for comparing with an image which serves as the "predetermined criterion" stored in the storage unit 14, or a method of calculating a feature amount such as a distance at which the reagent dispensing mechanism 110 and the cleaning liquid hit, and determining whether or not it is the "predetermined criterion". Further, the photographed image is displayed on the display unit 13 and the user may visually determine the image.

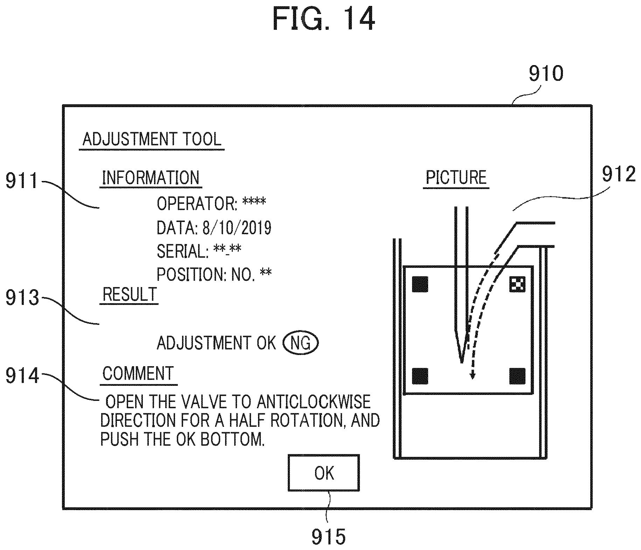

In Step S108, when it is determined that the amount of cleaning water of the cleaning mechanism W1 is outside the range of the predetermined criterion (NO in Step S108), an alarm is output to the display unit 13 (Step S109). After that, it is determined whether the amount of cleaning water is excessive or conversely too small (Step S110). When the amount of cleaning water is too small, the control unit 11 displays an instruction screen instructing the user to open the water amount adjusting valve V1 (Step S111). The instruction screen can be a screen as shown in Fig. 14, which will be described later. On the other hand, when it is determined that the amount of cleaning water is excessive, the control unit 11 displays a screen prompting the user to close the water amount adjusting valve V1 (Step S112). Incidentally, if the water amount adjusting valve V1 is electric and has a device configuration in which feedback control by the control unit 11 is incorporated, the opening/closing degree adjustment operation in Step S111 or Step S112 may be automatically changed (the operation of the cleaning unit may be changed). The control unit 11 repeats Steps S106 to S112 until the amount of cleaning water by the washing mechanism W1 is within a predetermined range.

When the control unit 11 determines that the cleaning mechanism W1 has been adjusted so that an appropriate amount of cleaning water is discharged (YES in Step S108), a display prompting the user to remove the measuring instrument SS from the measuring instrument mounting unit BX1 is displayed on the display unit 13 (Step S113). Then, the control unit 11 determines whether or not an adjustment execution number of times i is less than a predetermined number of times n (Step S114). If the adjustment execution number of times i has reached n, the processing operation proceeds to Step S116. If n has not been reached, the control unit 11 adds 1 to the adjustment execution number of times i and updates the adjustment execution number of times i (Step S115).

In Step S116, the control unit 11 captures an image of the measuring instrument mounting unit BX1 by the measuring instrument SS (Step S116), and confirms based on the captured image whether or not the measuring instrument SS has been removed from the measuring instrument mounting unit BX1. When the measuring operation of the automatic analyzer 100 is started in a state in which the measuring instrument SS is left behind in the measuring instrument mounting unit BX1, there is a possibility that a probe or the like may be damaged or the parts of the automatic analyzer 100 may be damaged. The image taken in Step S116 is confirmed, and it is confirmed whether or not the background image plate 800 or the like is included in the image (Step S117). In Step S116, instead of or in addition to the captured image of the measuring instrument SS, the measuring instrument sensor 704 may be caused to check if the measuring instrument SS remains in the measuring instrument mounting unit BX1. When the measuring instrument SS remains in the measuring instrument mounting unit BX1, the control unit 11 outputs an alarm and instructs the user to remove the camera (Step S118).

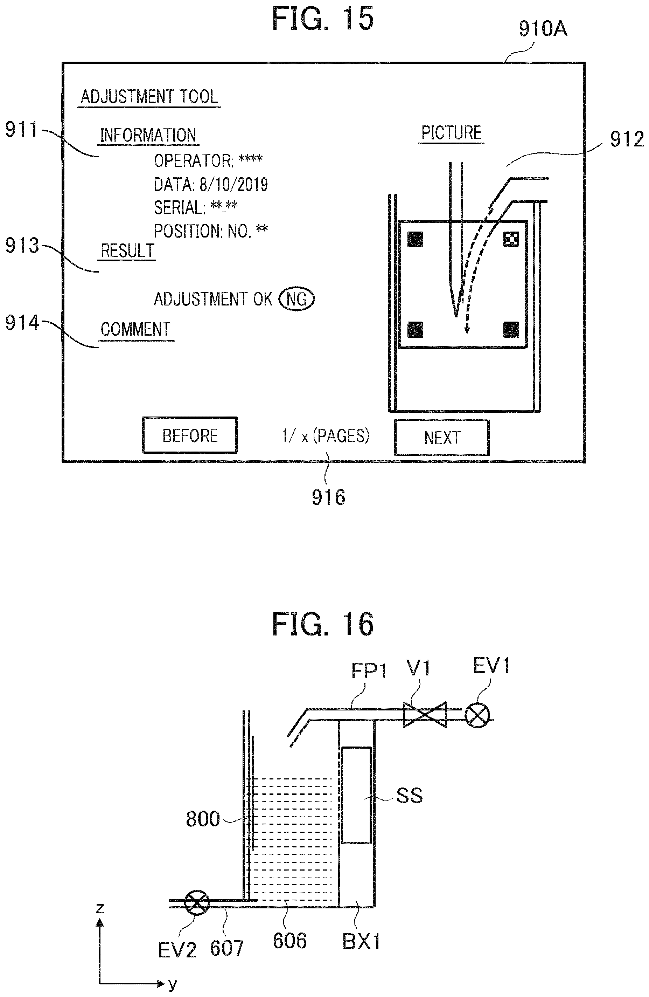

When the cleaning mechanism is adjusted a predetermined number of times, the control unit 11 creates an adjustment completion report 910A (Fig. 15) to be described later, based on the captured image and device information stored in the storage unit 14, and outputs it to the display unit 13 (Step S119). When the output of the adjustment completion report 910A is completed, the automatic adjustment tool is terminated (Step S120).

Fig. 13 is an example of the guide drawing 900 displayed on the display unit 13 in Step S102. The guide drawing 900 can be comprised of an overall view 901 showing an overall drawing of the device, an instruction view 902 clearly showing adjustment points, a remarks column 903 showing specific or incidental information regarding instructions to the user in sentences, a cancel button 904 clicked when stopping adjustment work, and a next button 905 clicked when proceeding to the next operation.

Fig. 14 is an example of the instruction screen 910 which can be displayed in Step S111. The screen of Fig. 14 includes, as an example, an information display column 911 which displays information such as adjustment points, adjuster information, adjustment date and time, and a device serial number, an adjustment image 912 taken by the measuring instrument SS during adjustment, a determination display column 913 for adjustment results, a special remarks column 914 which displays specific instructions when adjustment by the user is required again, and a button 915 which confirms the contents and proceeds to the next.

Fig. 15 shows an example of the screen (Step S119) of the adjustment completion report 910A. The screen of the adjustment completion report 910A includes, in addition to the display contents of the instruction screen 910 of Fig. 14, a switching button 916 for switching and displaying all the adjustment points on the device.

(First Modification of First Embodiment)

Fig. 16 shows a first modification of the first embodiment. This first modification includes a second electromagnetic valve EV2 which opens and closes the waste liquid pipe 607 of the cleaning tank 606. By closing the second electromagnetic valve EV2, the cleaning liquid discharged from the flow path FP1 is stored a certain amount in the cleaning tank 606, and the reagent dispensing mechanism 110 and the like are cleaned with the accumulated cleaning liquid. In the case of this first modification, in S108 of Fig. 12, the suitability of the cleaning operation can be determined by confirming with the measuring instrument SS whether or not the nozzle NZ1 sufficiently reaches the cleaning liquid accumulated in the cleaning tank 606.

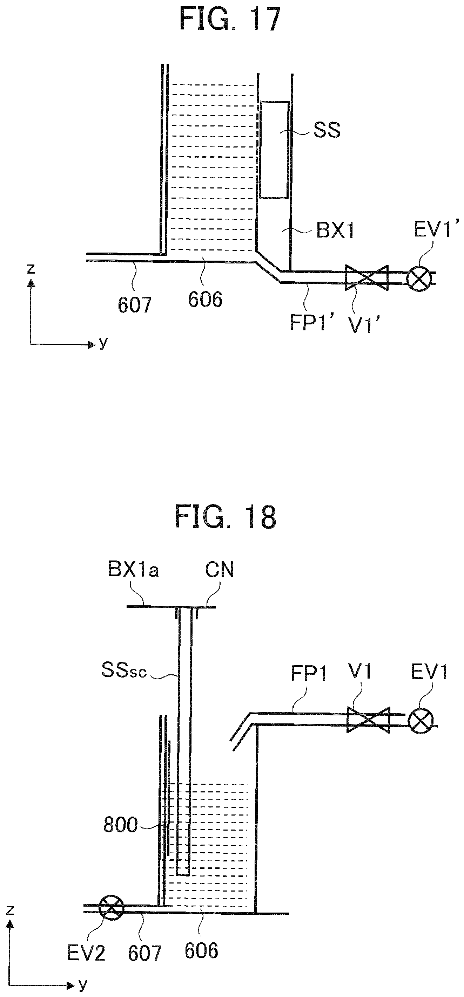

Fig. 17 shows a second modification of the first embodiment. This second modification is different from the above embodiment in that it has a configuration in which a flow path FP1' is connected to a lower part of the cleaning tank 606. The second modification has a configuration in which the inflow amount of the cleaning liquid exceeds the amount of the waste liquid from the waste liquid pipe 607. As in the first modification, the nozzle NZ1 of the reagent dispensing mechanism is inserted into the cleaning liquid accumulated in the cleaning tank 606 to perform cleaning.

Fig. 18 shows a third modification of the first embodiment. In this third modification, a measuring instrument mounting unit BX1a is provided at the upper part of the cleaning tank 606. The measuring instrument SS, for example, an electrostatic capacitance sensor SSsc can be suspended on the measuring instrument mounting unit BX1. As with the first modification, the cleaning tank 606 is configured to perform cleaning with the cleaning liquid accumulated in the cleaning tank 606. Therefore, the electrostatic capacitance sensor SSsc does not have to be a camera as long as it can measure the water level inside the cleaning tank 606. Instead of the electrostatic capacitance sensor, a non-contact ultrasonic sensor or an optical sensor may be adopted as the measuring instrument SS.

[Second Embodiment]

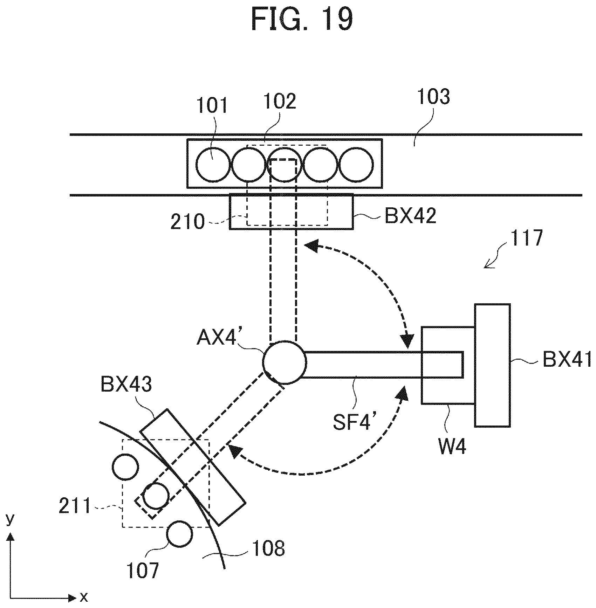

Next, an automatic analyzer 100 according to a second embodiment will be described with reference to Fig. 19. Since the automatic analyzer 100 of the second embodiment has substantially the same overall configuration as that of the first embodiment (Fig. 1), dual description will be omitted. A point of difference from the first embodiment resides in that a measuring instrument mounting unit BX is mounted in a sample dispensing mechanism 117, and its dispensing operation is measured or photographed by a measuring instrument SS.

In the first embodiment and its modification, the measuring instrument mounting unit BX is provided in the vicinity of the cleaning mechanisms W1 to W5. On the other hand, in the second embodiment, in addition to the cleaning mechanisms W1 to W5, the measuring instrument mounting unit BX is installed even in the vicinity of the position where the aspiration and discharge of the sample dispensing mechanism 117 are performed.

Fig. 19 is a schematic plan view describing a configuration in the vicinity of the sample dispensing mechanism 117 of the second embodiment. In the example of Fig. 19, in addition to (or instead of) a measuring instrument mounting unit BX41 being installed near the cleaning mechanism W4, measuring instrument mounting units BX42 and BX43 are installed even in the vicinity of a sample aspiration position 210 of the sample container rack 102 by the sample dispensing mechanism 117 and in the vicinity of a sample discharge position 211 of the incubator 108, respectively.

The positions of the nozzles (for example, the nozzles of the sample dispensing mechanism 117 and the reagent dispensing mechanism 110) of the various processing units of the automatic analyzer 100 have to be correctly adjusted in units of 0.1mm relative to the reaction vessel 107 and the reagent container 104 in order to aspirate and discharge an accurate amount of liquid. Considering the tolerances of various parts, it is necessary to perform positional adjustments in an xyz-axis direction at aspiration or discharge positions of various nozzles at the time of manufacturing or parts replacement. Further, the aspiration position and the discharge position may change due to changes with time or the like in the automatic analyzer.

According to this second embodiment, in addition to (or instead of) the cleaning mechanisms W1 to W5, the measuring instrument mounting units BX42 and BX43 are also provided at the liquid aspiration position and the liquid discharge position by the nozzle of the sample dispensing mechanism 117, and hence the aspiration and discharge operations of the nozzle can be monitored. Moreover, the measuring instrument SS for the monitoring can be shared among a plurality of processing units, and the manufacturing cost of the device can be reduced.

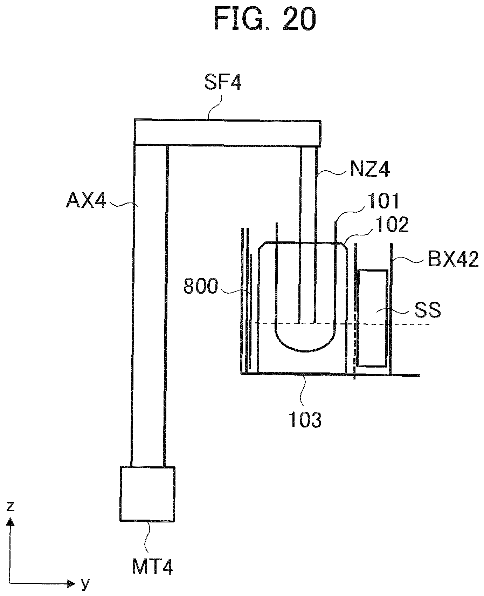

A specific configuration example (cross-sectional view) of the measuring instrument mounting unit BX42 is shown in Fig. 20. In the example of Fig. 20, the measuring instrument mounting unit BX42 is arranged at the sample aspiration position 210 of the nozzle NZ4 of the sample dispensing mechanism 117. The position of the nozzle NZ4 at the time of sample aspiration is adjusted by inserting the measuring instrument SS into the measuring instrument mounting unit BX42 and photographing the background image plate 800. The position of the background image plate 800 is not limited to a specific position, but it is preferable that the bottom surface of the rack transfer line 103 and the lower side of the background image plate 800 substantially coincide with each other.

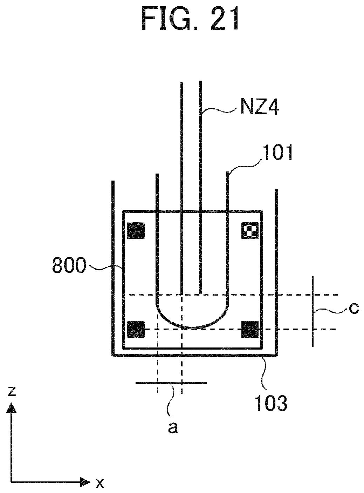

Fig. 21 is an example of an image obtained by photographing the sample container 101 and the like with the measuring instrument SS inserted into the measuring instrument mounting unit BX42. In order to adjust the position of the nozzle NZ4, a distance a in the x-axis direction between a wall surface of the sample container 101 and the nozzle NZ4, a distance b (not shown) in the y-axis direction between a wall surface of the sample container 101 and the nozzle NZ4, and a distance c in the z-axis direction between the tip of the nozzle NZ4 and the bottom surface of the sample container 101 can be calculated with reference to the positioning mark on the background image plate 800. Incidentally, the storage unit 14 may store physical quantities representing the distances between the reference surface of the device and each rod-shaped member, such as the distance a, the distance b, and the distance c, as "predetermined criteria". Here, the reference surface of the device is taken to be the bottom surface or the side surface of the sample container 101.

[Third Embodiment]

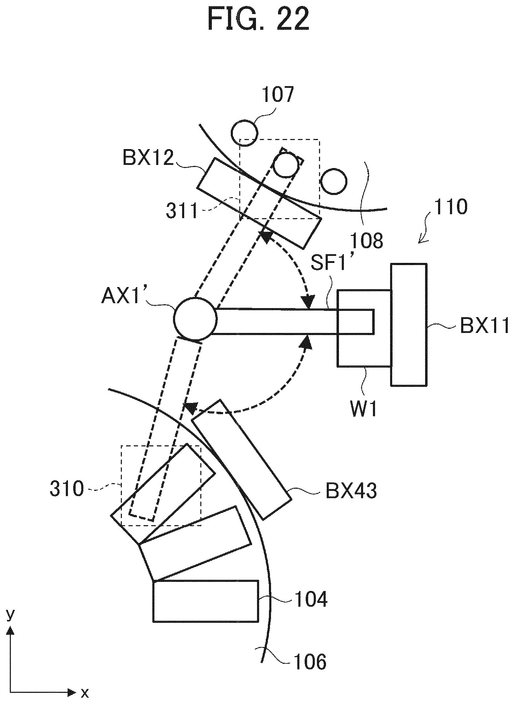

Next, an automatic analyzer 100 according to a third embodiment will be described with reference to Fig. 22. Since the automatic analyzer 100 of the third embodiment has substantially the same overall configuration as that of the first embodiment (Fig. 1), dual description will be omitted. A point of difference between the first embodiment and the third embodiment lies in the position where the measuring instrument mounting unit BX is provided, as with the second embodiment. However, this third embodiment relates to the reagent dispensing mechanism 110.

Fig. 22 is a schematic plan view describing a configuration in the vicinity of the reagent dispensing mechanism 110 of the third embodiment. In the example of Fig. 22, in addition to (or instead of) a measuring instrument mounting unit BX11 being installed in the vicinity of the cleaning mechanism W1, measuring instrument mounting units BX43 and BX12 are mounted even in the vicinity of a reagent aspiration position 310 of the reagent disk 106 by the reagent dispensing mechanism 110 and in the vicinity of a reagent discharge position 311 of the incubator 108, respectively. An unillustrated sensor window is provided on the side surface of the reagent disk 106 near the reagent aspiration position thereof. A measuring instrument SS arranged in the measuring instrument mounting unit BX43 is capable of measuring or observing the inside of the reagent disk 106 through the sensor window. Similarly, an unillustrated sensor window is provided on the side surface of the incubator 108 near the reagent discharge position thereof. A measuring instrument SS arranged in the measuring instrument mounting unit BX12 can measure or observe the inside of the incubator 108 through the sensor window.

According to this third embodiment, in addition to (or instead of) the cleaning mechanisms W1 to W5, the measuring instrument mounting unit BX is also provided at the aspiration position and the discharge position of the liquid by the nozzle of the reagent dispensing mechanism 110 and is capable of monitoring the aspiration and discharge operations of the nozzle. Moreover, the measuring instrument SS for the monitoring can be shared among a plurality of processing units, and the manufacturing cost of the device can be reduced.

[Fourth Embodiment]

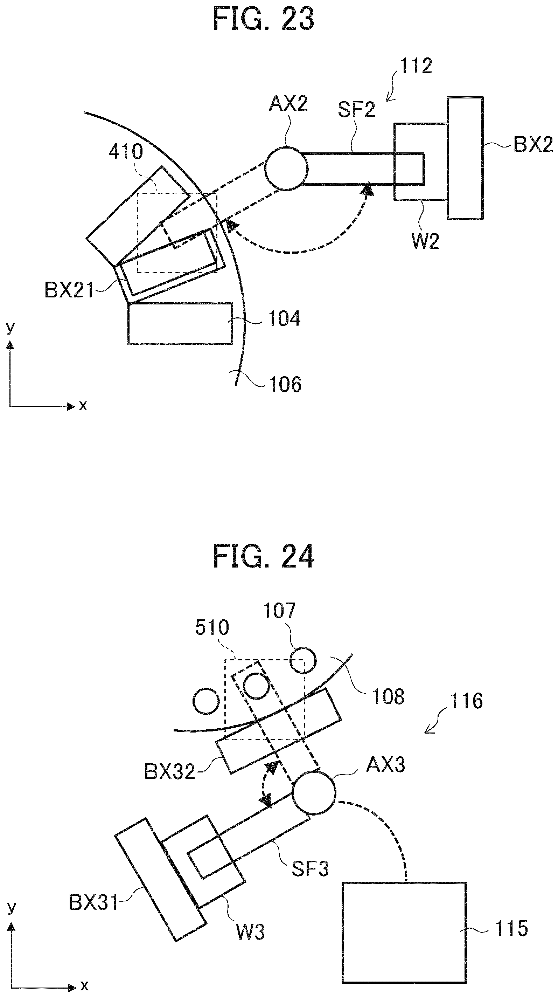

Next, an automatic analyzer 100 according to a fourth embodiment will be described with reference to Fig. 23. Since the automatic analyzer 100 of the fourth embodiment has substantially the same overall configuration as that of the first embodiment (Fig. 1), dual description will be omitted. A point of difference between the first embodiment and the fourth embodiment lies in the position where the measuring instrument mounting unit BX is provided, as with the second and third embodiments. However, this fourth embodiment relates to the stirring paddle drive mechanism 112.

Fig. 23 is a schematic plan view describing a configuration in the vicinity of the stirring paddle drive mechanism 112 of the fourth embodiment. In the example of Fig. 23, in addition to (or instead of) mounting a measuring instrument mounting unit BX2 in the vicinity of the cleaning mechanism W2 for the stirring paddle drive mechanism 112, a measuring instrument mounting unit BX21 is also provided near a stirring position 410 by the stirring paddle drive mechanism 112.

According to this fourth embodiment, in addition to (or instead of) the cleaning mechanisms W1 to W5, a measuring instrument mounting unit BX is also provided at the stirring position of the stirring paddle drive mechanism 112 and is capable of monitoring the stirring operation. Moreover, the measuring instrument SS for the monitoring can be shared among a plurality of processing units, and the manufacturing cost of the device can be reduced.

[Fifth Embodiment]

Next, an automatic analyzer 100 according to a fifth embodiment will be described with reference to Fig. 24. Since the automatic analyzer 100 of the fifth embodiment has substantially the same overall configuration as that of the first embodiment (Fig. 1), dual description will be omitted. A point of difference between the first embodiment and the fifth embodiment lies in the position where the measuring instrument mounting unit BX is provided, as with the second to fourth embodiments. However, this fifth embodiment relates to the reaction liquid aspiration mechanism 116.

Fig. 24 is a schematic plan view describing a configuration in the vicinity of the reaction liquid aspiration mechanism 116 of the fifth embodiment. In the example of Fig. 24, in addition to (or instead of) a measuring instrument mounting unit BX31 being provided in the vicinity of the cleaning mechanism W3 for the reaction liquid aspiration mechanism 116, the measuring instrument mounting unit BX31 is installed even in the vicinity of an aspiration position 510 of the incubator 108 by the reaction liquid aspiration mechanism 116.

According to this fifth embodiment, in addition to (or instead of) the cleaning mechanisms W1 to W5, the measuring instrument mounting unit BX is also provided at the aspiration position of the reaction liquid by the nozzle of the reaction liquid aspiration mechanism 116 and is capable of monitoring the aspiration operation of the nozzle. Moreover, the measuring instrument SS for the monitoring can be shared among a plurality of processing units, and the manufacturing cost of the device can be reduced.

[Sixth Embodiment]

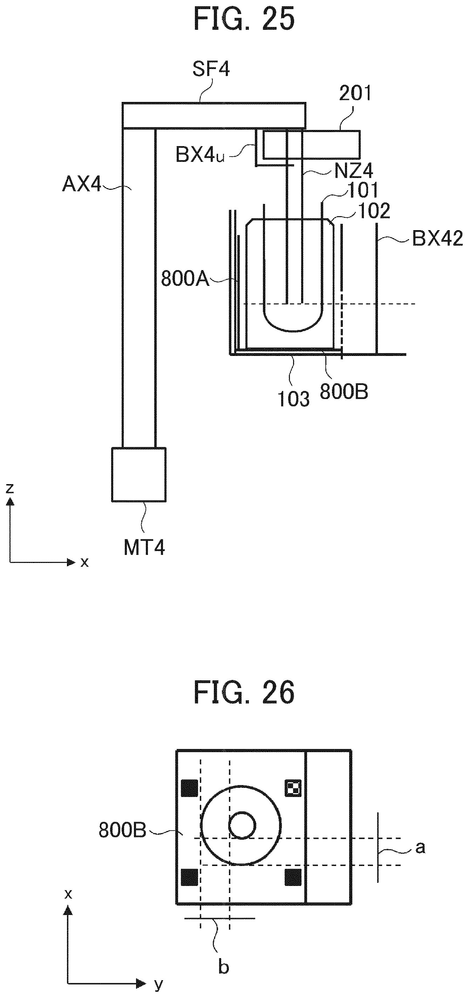

Next, an automatic analyzer 100 according to a sixth embodiment will be described with reference to Fig. 25. Since the automatic analyzer 100 of the sixth embodiment has substantially the same overall configuration as that of the first embodiment (Fig. 1), dual description will be omitted. A point of difference from the first embodiment lies in the position where the measuring instrument mounting unit BX is installed in the sample dispensing mechanism 117. The sixth embodiment is common to the second embodiment in that the measuring instrument mounting unit BX is provided even in the vicinity of the position where the aspiration and discharge of the sample dispensing mechanism 117 are performed. However, in the sixth embodiment, in addition to a measuring instrument mounting unit BX42 capable of measuring or photographing the sample container 101 from the lateral direction, a measuring instrument mounting unit BX4u capable of measuring or photographing from above the sample container 101 is provided. The measuring instrument SS installed in the measuring instrument mounting unit BX42 photographs a background image plate 800A arranged on the side of the sample container rack 102, and the measuring instrument SS installed in the measuring instrument mounting unit BX4u photographs a background image plate 800B arranged on the bottom surface side of the sample container rack 102.

Fig. 26 is an example of an image obtained by photographing the sample container 101 or the like from above with the measuring instrument SS inserted into the measuring instrument mounting unit BX4u. In order to adjust the position of a nozzle NZ, a distance a in the x-axis direction between a wall surface of the sample container 101 and the nozzle NZ4, and a distance b in the y-axis direction between a wall surface of the sample container 101 and the nozzle NZ4 can be calculated with reference to a positioning mark on the background image plate 800B.

[Seventh Embodiment]

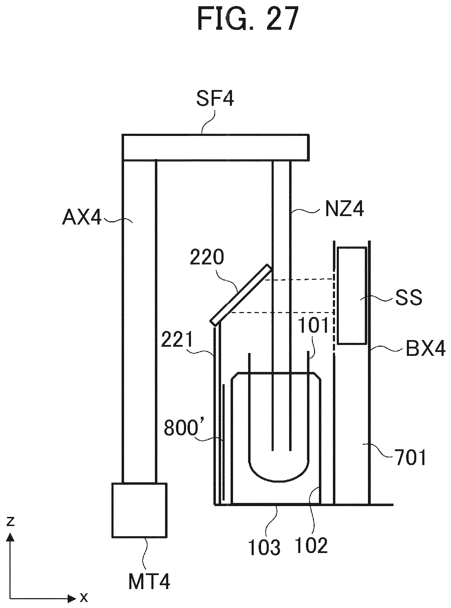

Next, an automatic analyzer 100 according to a seventh embodiment will be described with reference to Fig. 27. Since the automatic analyzer 100 of the seventh embodiment has substantially the same overall configuration as that of the first embodiment (Fig. 1), dual description will be omitted. This seventh embodiment is characterized by the configuration of the measuring instrument mounting unit BX4 in the sample dispensing mechanism 117 and is common to the sixth embodiment (Fig. 20) in this respect.

As shown in Fig. 27, in the seventh embodiment, the sample dispensing mechanism 117 includes, as the measuring instrument mounting unit BX4, the measuring instrument accommodating unit 701 which adjusts the height of the measuring instrument (camera), an optical element 220 (for example, a mirror, a prism, a light guide, etc.) which changes the optical path of the measuring instrument SS, and an optical element mounting unit 221 which fixes the optical element 220. By providing the measuring instrument accommodating unit 701, the measuring instrument SS can be held at a position higher than that of the sample container 101. Further, by providing the optical element 220, the sample container 101 can be observed from the measuring instrument SS lying in a high position. According to this configuration, the sample container 101 can be photographed even when there is no place to provide the measuring instrument mounting unit in the vicinity of the sample dispensing mechanism 117.

[Eighth Embodiment]

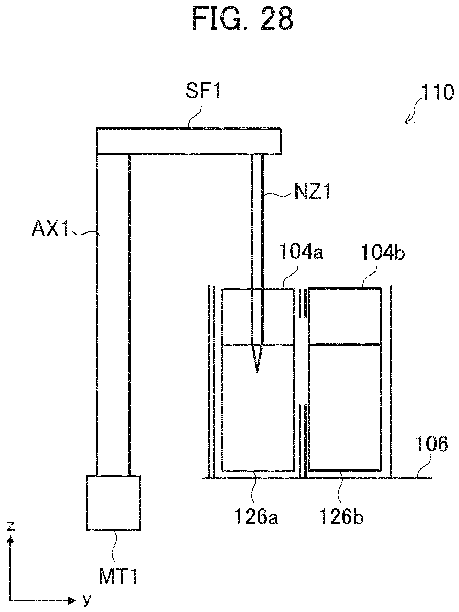

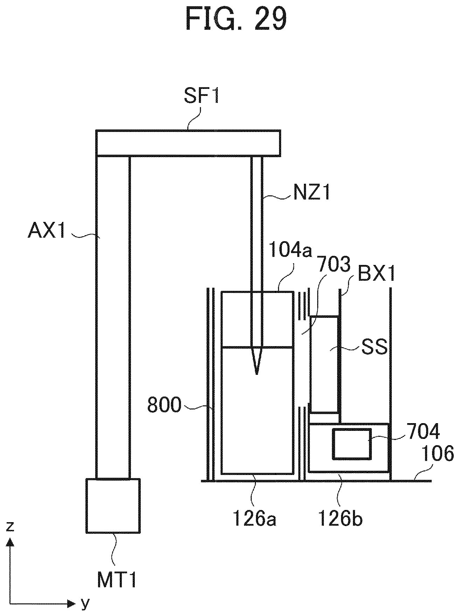

Next, an automatic analyzer 100 according to an eighth embodiment will be described with reference to Figs. 28 and 29. Since the automatic analyzer 100 of the eighth embodiment has substantially the same overall configuration as that of the first embodiment (Fig. 1), dual description will be omitted. This eighth embodiment is common to the third embodiment in that it is configured to measure or photograph the reagent dispensing operation in the reagent dispensing mechanism 110. However, in this eighth embodiment, the measuring instrument SS for measuring or photographing the reagent aspiration operation from the reagent disk 106 can be inserted into the reagent container storage unit of the reagent disk 106. That is, in this eighth embodiment, the reagent container storage unit also serves as the above-mentioned measuring instrument mounting unit.

Fig. 28 describes a cross-sectional structure of a general reagent disk 106 for comparison. The automatic analyzer 100 usually includes a plurality of reagent containers (104a, 104b ...) and a plurality of reagent container storage units (126a, 126b ...) in the reagent disk 106 in order to measure a plurality of measurement items, and has a configuration in which the reagent container and the reagent container storage unit can be moved to the reagent dispensing position.

As in the third embodiment (Fig. 22), a sensor window is provided on the outer periphery of the reagent disk 106, and a measuring instrument is arranged on the outer periphery of the reagent disk 106 through the sensor window, whereby the aspiration operation of the reagent can be monitored. However, the reagent disk 106 is usually covered with a thick heat insulating material on its outer periphery. Therefore, it may be difficult to arrange the measuring instrument SS on the side surface of the reagent disk 106 via the sensor window 3.

Fig. 29 shows a cross-sectional structure of the reagent disk 106 in the eighth embodiment. In the eighth embodiment, a measuring instrument mounting unit BX1 is prepared in one of the reagent container storage units (for example, 126b) in the reagent disk 106. That is, the reagent container storage unit 126b also serves as the measuring instrument mounting unit BX1.

A sensor window 703 is provided between the reagent container storage unit 126b which also serves as the measuring instrument mounting unit BX1 and the reagent container storage unit 126a which is a target to be measured. Further, a background image plate 800 similar to the above-described embodiment is provided on the side surface opposite to the measuring instrument mounting unit BX1. In addition, a measuring instrument sensor 704 similar to the above-described embodiment is provided below the reagent container storage unit 126b.

[Operations of Second to Eighth Embodiments]

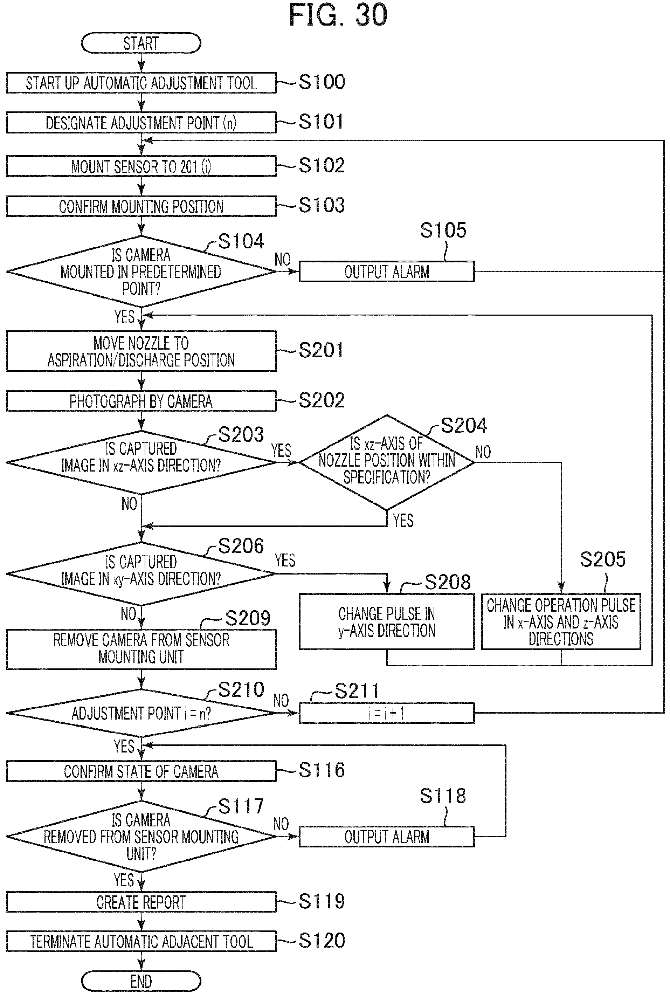

Fig. 30 is a flowchart in the case where the operation of adjusting the position of each of the rod-shaped members such as the various nozzles and the paddle for stirring is performed in the dispensing mechanism 110, the stirring paddle drive mechanism 112, the reaction liquid aspiration mechanism 116 (116a, 116b), the sample dispensing mechanism 117, the BF separation mechanism 118, and the like in the second to eighth embodiments (in Fig. 30, description will be made assuming that the nozzle is a target to be controlled). The operation of this flowchart is executed according to the automatic adjustment tool stored in the storage unit 14.

Since Steps S100 to 105 in Fig. 30 are the same as those in the first embodiment, dual description will be omitted. When it can be confirmed that the measuring instrument SS is mounted in a predetermined position (YES in Step S104), the control unit 11 moves the nozzle to a predetermined aspiration/discharge position (Step S201).

When the nozzle moves to the predetermined aspiration/discharge position, the nozzle and the background image plate 800 are taken by the measuring instrument SS (Step S202). The control unit 11 determines from the background image plate 800 whether or not the captured image is along the x-axis and z-axis directions (Step S203). If the determination in Step S203 is affirmative (YES), the control unit 11 calculates the position of the nozzle, and judges whether or not the position of the nozzle is within the range of the "predetermined criterion" in the x-axis direction and the z-axis direction (Step S204).

When the position in the x-axis direction is not within the range of the "predetermined criterion" (NO), the control unit 11 adds the number of adjustment pulses calculated from an equation 2 to an initial parameter of an operation pulse applied to a stepping motor of a nozzle drive mechanism, which is stored in the storage unit 14, to adjust the position of the nozzle in the x-axis direction. The adjustment is executed in the same manner even in the z-axis direction (Step S205).

(Adjustment pulse number pulse) = {(Design value a1 mm)-(x-axis distance a mm observed by measuring instrument SS)}}/rive per pulse (mm/pulse)     (Equation 2)

Next, the control unit 11 determines whether or not the captured image is an image along the x-axis and the y-axis (Step S206). If the determination is affirmative (YES), a y-axis operation pulse is changed in the same manner as in Step S205 (Step S208).

When all the adjustments of the xyz axis are completed, the control unit 11 moves the nozzle to the initial position and issues an instruction to remove the measuring instrument SS from the measuring instrument mounting unit 201 (Step S209). Next, when the number of adjustment execution times i is a predetermined number n or less, 1 is added to the adjustment execution number of times i. S201 to S209 are repeated until the number of adjustment execution times i reaches n.

When the number of adjustment execution times i reaches n (YES in Step S210), S116 to S120 similar to the processing described in Fig. 12 are executed to end the operation. Incidentally, the flowchart shown in Fig. 28 may be combined with the flowchart for adjusting the cleaning mechanisms W1 to W5 of Fig. 12 in the first embodiment.

Incidentally, the present invention is not limited to the above-described embodiments and includes various modifications. For example, the above-described embodiments have been described in detail in order to explain the present invention in an easy-to-understand manner, and are not necessarily limited to those having all the described configurations. Further, it is possible to replace a part of the configuration of one embodiment with the configuration of another embodiment, and it is also possible to add the configuration of another embodiment to the configuration of one embodiment. In addition, it is possible to apply addition/deletion/replacement of another configuration with respect to a part of the configuration of each embodiment.

**List of Reference Signs**

100 ... automatic analyzer, 100A ... main body unit, 11 ... control unit, 12 ... input unit, 13 ... display unit, 14 ... storage unit, 15 ... external control unit, 101 ... sample container, 102 ... sample container rack, 103 ... rack transfer line, 104 ... reagent container, 105 ... reagent disk cover, 106 ... reagent disk, 107 ... reaction vessel, 108 ... incubator, W1 to W5 ... cleaning mechanism, 110 ... reagent dispensing mechanism, 112 ... stirring paddle drive mechanism, 115 ... detection mechanism, 116 ... reaction liquid aspiration mechanism, 117 ... sample dispensing mechanism, BX1-5 ... measuring instrument mounting unit, SF1-5 ... shaft, AX1-5 ... rotating axis, SS ... measuring instrument. instrument SS into the predetermined measuring instrument mounting unit BX1 according to this indication.

At this time, in order to prevent the measuring instrument SS from being attached to an erroneous place, the control unit 11 reads the machine-readable text 802 from the background image plate 800 and confirms the position where the measuring instrument SS should be mounted (Step S103). When the measuring instrument mounting unit BX1 and the measuring instrument SS are connected by proximity wireless communication such as RFID or a connector, the control unit 11 is capable of reading information of the measuring instrument mounting unit BX1 via the proximity wireless communication or the connector.

Next, the control unit 11 determines whether or not the information of the mounting position read in Step S103 and the mounting position on the automatic adjustment tool match (Step S104). Incidentally, when the measuring instrument SS is installed in the measuring instrument mounting unit BX1 which is not planned, or when the machine-readable text 802 cannot be read, the control unit 11 outputs an alarm to the display unit 13 (Step S105).

When it can be confirmed that the measuring instrument SS is mounted in a predetermined position (YES in Step S104), the control unit 11 opens the electromagnetic valve EV1 and performs a cleaning step of discharging the cleaning liquid from the flow path FP toward the nozzle NZ1 (Step S106). Then, the measuring instrument SS (camera) measures or photographs the cleaning step, and stores a measurement result or an image in the storage unit 14 (Step S107).

Subsequently, the control unit 11 determines from the measurement result or the photographed image whether or not the amount of water in the cleaning liquid from the cleaning mechanism W1 is within the range of the "predetermined criterion" (Step S108). At this time, it is possible to correct an error in the mounting position of the measuring instrument SS, based on the position of the positioning mark 801 of the background image plate 800. The determination method in Step S108 may be a method using image processing for comparing with an image which serves as the "predetermined criterion" stored in the storage unit 14, or a method of calculating a feature amount such as a distance at which the reagent dispensing mechanism 110 and the cleaning liquid hit, and determining whether or not it is the "predetermined criterion". Further, the photographed image is displayed on the display unit 13 and the user may visually determine the image.

In Step S108, when it is determined that the amount of cleaning water of the cleaning mechanism W1 is outside the range of the predetermined criterion (NO in Step S108), an alarm is output to the display unit 13 (Step S109). After that, it is determined whether the amount of cleaning water is excessive or conversely too small (Step S110). When the amount of cleaning water is too small, the control unit 11 displays an instruction screen instructing the user to open the water amount adjusting valve V1 (Step S111). The instruction screen can be a screen as shown in Fig. 14, which will be described later. On the other hand, when it is determined that the amount of cleaning water is excessive, the control unit 11 displays a screen prompting the user to close the water amount adjusting valve V1 (Step S112). Incidentally, if the water amount adjusting valve V1 is electric and has a device configuration in which feedback control by the control unit 11 is incorporated, the opening/closing degree adjustment operation in Step S111 or Step S112 may be automatically changed (the operation of the cleaning unit may be changed). The control unit 11 repeats Steps S106 to S112 until the amount of cleaning water by the washing mechanism W1 is within a predetermined range.

When the control unit 11 determines that the cleaning mechanism W1 has been adjusted so that an appropriate amount of cleaning water is discharged (YES in Step S108), a display prompting the user to remove the measuring instrument SS from the measuring instrument mounting unit BX1 is displayed on the display unit 13 (Step S113). Then, the control unit 11 determines whether or not an adjustment execution number of times i is less than a predetermined number of times n (Step S114). If the adjustment execution number of times i has reached n, the processing operation proceeds to Step S116. If n has not been reached, the control unit 11 adds 1 to the adjustment execution number of times i and updates the adjustment execution number of times i (Step S115).

In Step S116, the control unit 11 captures an image of the measuring instrument mounting unit BX1 by the measuring instrument SS (Step S116), and confirms based on the captured image whether or not the measuring instrument SS has been removed from the measuring instrument mounting unit BX1. When the measuring operation of the automatic analyzer 100 is started in a state in which the measuring instrument SS is left behind in the measuring instrument mounting unit BX1, there is a possibility that a probe or the like may be damaged or the parts of the automatic analyzer 100 may be damaged. The image taken in Step S116 is confirmed, and it is confirmed whether or not the background image plate 800 or the like is included in the image (Step S117). In Step S116, instead of or in addition to the captured image of the measuring instrument SS, the measuring instrument sensor 704 may be caused to check if the measuring instrument SS remains in the measuring instrument mounting unit BX1. When the measuring instrument SS remains in the measuring instrument mounting unit BX1, the control unit 11 outputs an alarm and instructs the user to remove the camera (Step S118).

When the cleaning mechanism is adjusted a predetermined number of times, the control unit 11 creates an adjustment completion report 910A (Fig. 15) to be described later, based on the captured image and device information stored in the storage unit 14, and outputs it to the display unit 13 (Step S119). When the output of the adjustment completion report 910A is completed, the automatic adjustment tool is terminated (Step S120).

Fig. 13 is an example of the guide drawing 900 displayed on the display unit 13 in Step S102. The guide drawing 900 can be comprised of an overall view 901 showing an overall drawing of the device, an instruction view 902 clearly showing adjustment points, a remarks column 903 showing specific or incidental information regarding instructions to the user in sentences, a cancel button 904 clicked when stopping adjustment work, and a next button 905 clicked when proceeding to the next operation.

Fig. 14 is an example of the instruction screen 910 which can be displayed in Step S111. The screen of Fig. 14 includes, as an example, an information display column 911 which displays information such as adjustment points, adjuster information, adjustment date and time, and a device serial number, an adjustment image 912 taken by the measuring instrument SS during adjustment, a determination display column 913 for adjustment results, a special remarks column 914 which displays specific instructions when adjustment by the user is required again, and a button 915 which confirms the contents and proceeds to the next.

Fig. 15 shows an example of the screen (Step S119) of the adjustment completion report 910A. The screen of the adjustment completion report 910A includes, in addition to the display contents of the instruction screen 910 of Fig. 14, a switching button 916 for switching and displaying all the adjustment points on the device.

(First Modification of First Embodiment)

Fig. 16 shows a first modification of the first embodiment. This first modification includes a second electromagnetic valve EV2 which opens and closes the waste liquid pipe 607 of the cleaning tank 606. By closing the second electromagnetic valve EV2, the cleaning liquid discharged from the flow path FP1 is stored a certain amount in the cleaning tank 606, and the reagent dispensing mechanism 110 and the like are cleaned with the accumulated cleaning liquid. In the case of this first modification, in S108 of Fig. 12, the suitability of the cleaning operation can be determined by confirming with the measuring instrument SS whether or not the nozzle NZ1 sufficiently reaches the cleaning liquid accumulated in the cleaning tank 606.

Fig. 17 shows a second modification of the first embodiment. This second modification is different from the above embodiment in that it has a configuration in which a flow path FP1' is connected to a lower part of the cleaning tank 606. The second modification has a configuration in which the inflow amount of the cleaning liquid exceeds the amount of the waste liquid from the waste liquid pipe 607. As in the first modification, the nozzle NZ1 of the reagent dispensing mechanism is inserted into the cleaning liquid accumulated in the cleaning tank 606 to perform cleaning.

Fig. 18 shows a third modification of the first embodiment. In this third modification, a measuring instrument mounting unit BX1a is provided at the upper part of the cleaning tank 606. The measuring instrument SS, for example, an electrostatic capacitance sensor SSsc can be suspended on the measuring instrument mounting unit BX1. As with the first modification, the cleaning tank 606 is configured to perform cleaning with the cleaning liquid accumulated in the cleaning tank 606. Therefore, the electrostatic capacitance sensor SSsc does not have to be a camera as long as it can measure the water level inside the cleaning tank 606. Instead of the electrostatic capacitance sensor, a non-contact ultrasonic sensor or an optical sensor may be adopted as the measuring instrument SS.

[Second Embodiment]

Next, an automatic analyzer 100 according to a second embodiment will be described with reference to Fig. 19. Since the automatic analyzer 100 of the second embodiment has substantially the same overall configuration as that of the first embodiment (Fig. 1), dual description will be omitted. A point of difference from the first embodiment resides in that a measuring instrument mounting unit BX is mounted in a sample dispensing mechanism 117, and its dispensing operation is measured or photographed by a measuring instrument SS.

In the first embodiment and its modification, the measuring instrument mounting unit BX is provided in the vicinity of the cleaning mechanisms W1 to W5. On the other hand, in the second embodiment, in addition to the cleaning mechanisms W1 to W5, the measuring instrument mounting unit BX is installed even in the vicinity of the position where the aspiration and discharge of the sample dispensing mechanism 117 are performed.

Fig. 19 is a schematic plan view describing a configuration in the vicinity of the sample dispensing mechanism 117 of the second embodiment. In the example of Fig. 19, in addition to (or instead of) a measuring instrument mounting unit BX41 being installed near the cleaning mechanism W4, measuring instrument mounting units BX42 and BX43 are installed even in the vicinity of a sample aspiration position 210 of the sample container rack 102 by the sample dispensing mechanism 117 and in the vicinity of a sample discharge position 211 of the incubator 108, respectively.

The positions of the nozzles (for example, the nozzles of the sample dispensing mechanism 117 and the reagent dispensing mechanism 110) of the various processing units of the automatic analyzer 100 have to be correctly adjusted in units of 0.1mm relative to the reaction vessel 107 and the reagent container 104 in order to aspirate and discharge an accurate amount of liquid. Considering the tolerances of various parts, it is necessary to perform positional adjustments in an xyz-axis direction at aspiration or discharge positions of various nozzles at the time of manufacturing or parts replacement. Further, the aspiration position and the discharge position may change due to changes with time or the like in the automatic analyzer.

According to this second embodiment, in addition to (or instead of) the cleaning mechanisms W1 to W5, the measuring instrument mounting units BX42 and BX43 are also provided at the liquid aspiration position and the liquid discharge position by the nozzle of the sample dispensing mechanism 117, and hence the aspiration and discharge operations of the nozzle can be monitored. Moreover, the measuring instrument SS for the monitoring can be shared among a plurality of processing units, and the manufacturing cost of the device can be reduced.

A specific configuration example (cross-sectional view) of the measuring instrument mounting unit BX42 is shown in Fig. 20. In the example of Fig. 20, the measuring instrument mounting unit BX42 is arranged at the sample aspiration position 210 of the nozzle NZ4 of the sample dispensing mechanism 117. The position of the nozzle NZ4 at the time of sample aspiration is adjusted by inserting the measuring instrument SS into the measuring instrument mounting unit BX42 and photographing the background image plate 800. The position of the background image plate 800 is not limited to a specific position, but it is preferable that the bottom surface of the rack transfer line 103 and the lower side of the background image plate 800 substantially coincide with each other.

Fig. 21 is an example of an image obtained by photographing the sample container 101 and the like with the measuring instrument SS inserted into the measuring instrument mounting unit BX42. In order to adjust the position of the nozzle NZ4, a distance a in the x-axis direction between a wall surface of the sample container 101 and the nozzle NZ4, a distance b (not shown) in the y-axis direction between a wall surface of the sample container 101 and the nozzle NZ4, and a distance c in the z-axis direction between the tip of the nozzle NZ4 and the bottom surface of the sample container 101 can be calculated with reference to the positioning mark on the background image plate 800. Incidentally, the storage unit 14 may store physical quantities representing the distances between the reference surface of the device and each rod-shaped member, such as the distance a, the distance b, and the distance c, as "predetermined criteria". Here, the reference surface of the device is taken to be the bottom surface or the side surface of the sample container 101.

[Third Embodiment]

Next, an automatic analyzer 100 according to a third embodiment will be described with reference to Fig. 22. Since the automatic analyzer 100 of the third embodiment has substantially the same overall configuration as that of the first embodiment (Fig. 1), dual description will be omitted. A point of difference between the first embodiment and the third embodiment lies in the position where the measuring instrument mounting unit BX is provided, as with the second embodiment. However, this third embodiment relates to the reagent dispensing mechanism 110.

Fig. 22 is a schematic plan view describing a configuration in the vicinity of the reagent dispensing mechanism 110 of the third embodiment. In the example of Fig. 22, in addition to (or instead of) a measuring instrument mounting unit BX11 being installed in the vicinity of the cleaning mechanism W1, measuring instrument mounting units BX43 and BX12 are mounted even in the vicinity of a reagent aspiration position 310 of the reagent disk 106 by the reagent dispensing mechanism 110 and in the vicinity of a reagent discharge position 311 of the incubator 108, respectively. An unillustrated sensor window is provided on the side surface of the reagent disk 106 near the reagent aspiration position thereof. A measuring instrument SS arranged in the measuring instrument mounting unit BX43 is capable of measuring or observing the inside of the reagent disk 106 through the sensor window. Similarly, an unillustrated sensor window is provided on the side surface of the incubator 108 near the reagent discharge position thereof. A measuring instrument SS arranged in the measuring instrument mounting unit BX12 can measure or observe the inside of the incubator 108 through the sensor window.

According to this third embodiment, in addition to (or instead of) the cleaning mechanisms W1 to W5, the measuring instrument mounting unit BX is also provided at the aspiration position and the discharge position of the liquid by the nozzle of the reagent dispensing mechanism 110 and is capable of monitoring the aspiration and discharge operations of the nozzle. Moreover, the measuring instrument SS for the monitoring can be shared among a plurality of processing units, and the manufacturing cost of the device can be reduced.

[Fourth Embodiment]

Next, an automatic analyzer 100 according to a fourth embodiment will be described with reference to Fig. 23. Since the automatic analyzer 100 of the fourth embodiment has substantially the same overall configuration as that of the first embodiment (Fig. 1), dual description will be omitted. A point of difference between the first embodiment and the fourth embodiment lies in the position where the measuring instrument mounting unit BX is provided, as with the second and third embodiments. However, this fourth embodiment relates to the stirring paddle drive mechanism 112.

Fig. 23 is a schematic plan view describing a configuration in the vicinity of the stirring paddle drive mechanism 112 of the fourth embodiment. In the example of Fig. 23, in addition to (or instead of) mounting a measuring instrument mounting unit BX2 in the vicinity of the cleaning mechanism W2 for the stirring paddle drive mechanism 112, a measuring instrument mounting unit BX21 is also provided near a stirring position 410 by the stirring paddle drive mechanism 112.

According to this fourth embodiment, in addition to (or instead of) the cleaning mechanisms W1 to W5, a measuring instrument mounting unit BX is also provided at the stirring position of the stirring paddle drive mechanism 112 and is capable of monitoring the stirring operation. Moreover, the measuring instrument SS for the monitoring can be shared among a plurality of processing units, and the manufacturing cost of the device can be reduced.

[Fifth Embodiment]

Next, an automatic analyzer 100 according to a fifth embodiment will be described with reference to Fig. 24. Since the automatic analyzer 100 of the fifth embodiment has substantially the same overall configuration as that of the first embodiment (Fig. 1), dual description will be omitted. A point of difference between the first embodiment and the fifth embodiment lies in the position where the measuring instrument mounting unit BX is provided, as with the second to fourth embodiments. However, this fifth embodiment relates to the reaction liquid aspiration mechanism 116.

Fig. 24 is a schematic plan view describing a configuration in the vicinity of the reaction liquid aspiration mechanism 116 of the fifth embodiment. In the example of Fig. 24, in addition to (or instead of) a measuring instrument mounting unit BX31 being provided in the vicinity of the cleaning mechanism W3 for the reaction liquid aspiration mechanism 116, the measuring instrument mounting unit BX31 is installed even in the vicinity of an aspiration position 510 of the incubator 108 by the reaction liquid aspiration mechanism 116.

According to this fifth embodiment, in addition to (or instead of) the cleaning mechanisms W1 to W5, the measuring instrument mounting unit BX is also provided at the aspiration position of the reaction liquid by the nozzle of the reaction liquid aspiration mechanism 116 and is capable of monitoring the aspiration operation of the nozzle. Moreover, the measuring instrument SS for the monitoring can be shared among a plurality of processing units, and the manufacturing cost of the device can be reduced.

[Sixth Embodiment]

Next, an automatic analyzer 100 according to a sixth embodiment will be described with reference to Fig. 25. Since the automatic analyzer 100 of the sixth embodiment has substantially the same overall configuration as that of the first embodiment (Fig. 1), dual description will be omitted. A point of difference from the first embodiment lies in the position where the measuring instrument mounting unit BX is installed in the sample dispensing mechanism 117. The sixth embodiment is common to the second embodiment in that the measuring instrument mounting unit BX is provided even in the vicinity of the position where the aspiration and discharge of the sample dispensing mechanism 117 are performed. However, in the sixth embodiment, in addition to a measuring instrument mounting unit BX42 capable of measuring or photographing the sample container 101 from the lateral direction, a measuring instrument mounting unit BX4u capable of measuring or photographing from above the sample container 101 is provided. The measuring instrument SS installed in the measuring instrument mounting unit BX42 photographs a background image plate 800A arranged on the side of the sample container rack 102, and the measuring instrument SS installed in the measuring instrument mounting unit BX4u photographs a background image plate 800B arranged on the bottom surface side of the sample container rack 102.

Fig. 26 is an example of an image obtained by photographing the sample container 101 or the like from above with the measuring instrument SS inserted into the measuring instrument mounting unit BX4u. In order to adjust the position of a nozzle NZ, a distance a in the x-axis direction between a wall surface of the sample container 101 and the nozzle NZ4, and a distance b in the y-axis direction between a wall surface of the sample container 101 and the nozzle NZ4 can be calculated with reference to a positioning mark on the background image plate 800B.

[Seventh Embodiment]

Next, an automatic analyzer 100 according to a seventh embodiment will be described with reference to Fig. 27. Since the automatic analyzer 100 of the seventh embodiment has substantially the same overall configuration as that of the first embodiment (Fig. 1), dual description will be omitted. This seventh embodiment is characterized by the configuration of the measuring instrument mounting unit BX4 in the sample dispensing mechanism 117 and is common to the sixth embodiment (Fig. 20) in this respect.

As shown in Fig. 27, in the seventh embodiment, the sample dispensing mechanism 117 includes, as the measuring instrument mounting unit BX4, the measuring instrument accommodating unit 701 which adjusts the height of the measuring instrument (camera), an optical element 220 (for example, a mirror, a prism, a light guide, etc.) which changes the optical path of the measuring instrument SS, and an optical element mounting unit 221 which fixes the optical element 220. By providing the measuring instrument accommodating unit 701, the measuring instrument SS can be held at a position higher than that of the sample container 101. Further, by providing the optical element 220, the sample container 101 can be observed from the measuring instrument SS lying in a high position. According to this configuration, the sample container 101 can be photographed even when there is no place to provide the measuring instrument mounting unit in the vicinity of the sample dispensing mechanism 117.

[Eighth Embodiment]

Next, an automatic analyzer 100 according to an eighth embodiment will be described with reference to Figs. 28 and 29. Since the automatic analyzer 100 of the eighth embodiment has substantially the same overall configuration as that of the first embodiment (Fig. 1), dual description will be omitted. This eighth embodiment is common to the third embodiment in that it is configured to measure or photograph the reagent dispensing operation in the reagent dispensing mechanism 110. However, in this eighth embodiment, the measuring instrument SS for measuring or photographing the reagent aspiration operation from the reagent disk 106 can be inserted into the reagent container storage unit of the reagent disk 106. That is, in this eighth embodiment, the reagent container storage unit also serves as the above-mentioned measuring instrument mounting unit.

Fig. 28 describes a cross-sectional structure of a general reagent disk 106 for comparison. The automatic analyzer 100 usually includes a plurality of reagent containers (104a, 104b ...) and a plurality of reagent container storage units (126a, 126b ...) in the reagent disk 106 in order to measure a plurality of measurement items, and has a configuration in which the reagent container and the reagent container storage unit can be moved to the reagent dispensing position.

As in the third embodiment (Fig. 22), a sensor window is provided on the outer periphery of the reagent disk 106, and a measuring instrument is arranged on the outer periphery of the reagent disk 106 through the sensor window, whereby the aspiration operation of the reagent can be monitored. However, the reagent disk 106 is usually covered with a thick heat insulating material on its outer periphery. Therefore, it may be difficult to arrange the measuring instrument SS on the side surface of the reagent disk 106 via the sensor window **3**.

Fig. 29 shows a cross-sectional structure of the reagent disk 106 in the eighth embodiment. In the eighth embodiment, a measuring instrument mounting unit BX1 is prepared in one of the reagent container storage units (for example, 126b) in the reagent disk 106. That is, the reagent container storage unit 126b also serves as the measuring instrument mounting unit BX1.

A sensor window 703 is provided between the reagent container storage unit 126b which also serves as the measuring instrument mounting unit BX1 and the reagent container storage unit 126a which is a target to be measured. Further, a background image plate 800 similar to the above-described embodiment is provided on the side surface opposite to the measuring instrument mounting unit BX1. In addition, a measuring instrument sensor 704 similar to the above-described embodiment is provided below the reagent container storage unit 126b.

[Operations of Second to Eighth Embodiments]

Fig. 30 is a flowchart in the case where the operation of adjusting the position of each of the rod-shaped members such as the various nozzles and the paddle for stirring is performed in the dispensing mechanism 110, the stirring paddle drive mechanism 112, the reaction liquid aspiration mechanism 116 (116a, 116b), the sample dispensing mechanism 117, the BF separation mechanism 118, and the like in the second to eighth embodiments (in Fig. 30, description will be made assuming that the nozzle is a target to be controlled). The operation of this flowchart is executed according to the automatic adjustment tool stored in the storage unit 14.

Since Steps S100 to 105 in Fig. 30 are the same as those in the first embodiment, dual description will be omitted. When it can be confirmed that the measuring instrument SS is mounted in a predetermined position (YES in Step S104), the control unit 11 moves the nozzle to a predetermined aspiration/discharge position (Step S201).

When the nozzle moves to the predetermined aspiration/discharge position, the nozzle and the background image plate 800 are taken by the measuring instrument SS (Step S202). The control unit 11 determines from the background image plate 800 whether or not the captured image is along the x-axis and z-axis directions (Step S203). If the determination in Step S203 is affirmative (YES), the control unit 11 calculates the position of the nozzle, and judges whether or not the position of the nozzle is within the range of the "predetermined criterion" in the x-axis direction and the z-axis direction (Step S204).

When the position in the x-axis direction is not within the range of the "predetermined criterion" (NO), the control unit 11 adds the number of adjustment pulses calculated from an equation 2 to an initial parameter of an operation pulse applied to a stepping motor of a nozzle drive mechanism, which is stored in the storage unit 14, to adjust the position of the nozzle in the x-axis direction. The adjustment is executed in the same manner even in the z-axis direction (Step S205).

(Adjustment pulse number pulse) = {(Design value al mm)-(x-axis distance a mm observed by measuring instrument SS)}} /rive per pulse (mm/pulse)     (Equation 2)

Next, the control unit 11 determines whether or not the captured image is an image along the x-axis and the y-axis (Step S206). If the determination is affirmative (YES), a y-axis operation pulse is changed in the same manner as in Step S205 (Step S208).

When all the adjustments of the xyz axis are completed, the control unit 11 moves the nozzle to the initial position and issues an instruction to remove the measuring instrument SS from the measuring instrument mounting unit 201 (Step S209). Next, when the number of adjustment execution times i is a predetermined number n or less, 1 is added to the adjustment execution number of times i. S201 to S209 are repeated until the number of adjustment execution times i reaches n.

When the number of adjustment execution times i reaches n (YES in Step S210), S116 to S120 similar to the processing described in Fig. 12 are executed to end the operation. Incidentally, the flowchart shown in Fig. 28 may be combined with the flowchart for adjusting the cleaning mechanisms W1 to W5 of Fig. 12 in the first embodiment.

Incidentally, the present invention is not limited to the above-described embodiments and includes various modifications. For example, the above-described embodiments have been described in detail in order to explain the present invention in an easy-to-understand manner, and are not necessarily limited to those having all the described configurations. Further, it is possible to replace a part of the configuration of one embodiment with the configuration of another embodiment, and it is also possible to add the configuration of another embodiment to the configuration of one embodiment. In addition, it is possible to apply addition/deletion/replacement of another configuration with respect to a part of the configuration of each embodiment.

List of Reference Signs

100 ... automatic analyzer, 100A ... main body unit, 11 ... control unit, 12 ... input unit, 13 ... display unit, 14 ... storage unit, 15 ... external control unit, 101 ... sample container, 102 ... sample container rack, 103 ... rack transfer line, 104 ... reagent container, 105 ... reagent disk cover, 106 ... reagent disk, 107 ... reaction vessel, 108 ... incubator, W1 to W5 ... cleaning mechanism, 110 ... reagent dispensing mechanism, 112 ... stirring paddle drive mechanism, 115 ... detection mechanism, 116 ... reaction liquid aspiration mechanism, 117 ... sample dispensing mechanism, BX1-5 ... measuring instrument mounting unit, SF1-5 ... shaft, AX1-5 ... rotating axis, SS ... measuring instrument.

**Claims**

1. An automatic analyzer comprising:

   a plurality of processing units which execute operations relates to analysis, wherein the processing units have a rod-shaped member which comes into contact with liquid;
   a plurality of measuring instrument mounting units (BX1-5, 201) which are arranged in each of the plurality of processing units and configured to allow a measuring instrument (SS) to be mounted, said measuring instrument measuring each of the operations of the plurality of processing units; and
   a control unit (11) which controls the plurality of processing units,
   **characterized in that** each of the plurality of measuring instrument mounting units (BX1-5, 201) is configured to allow the measuring instrument (SS) to be removed and configured to allow the removed measuring instrument to be mounted to another measuring instrument mounting unit (BX1-5, 201), wherein the measuring instrument mounting unit (BX1-5, 201) is arranged so that the measuring instrument (SS) is capable of measuring a stop position of the rod-shaped member.

2. The automatic analyzer according to claim 1, including a display unit (13) which displays a measurement result of the operation obtained by the measuring instrument (SS).

3. The automatic analyzer according to claim 2, wherein the control unit (11) determines based on the measurement result whether or not the operation is within a predetermined criterion.

4. The automatic analyzer according to claim 3, wherein the control unit (11) changes the operation of the processing unit, based on the result of determining whether or not the operation is within the predetermined criterion.

5. The automatic analysis unit according to claim 1, wherein each of the plurality of measuring instrument mounting units (BX1-5) includes a measuring instrument accommodating unit (701), a lock mechanism (702), a measuring instrument sensor (704), and an identification label (705), wherein the measuring instrument accommodating unit (701) is a housing in which the internal measuring instrument (SS) can be mounted, the lock mechanism (702) is a mechanism for fixing the measuring instrument (SS) mounted inside the measuring instrument accommodating unit (701), the measuring instrument sensor (704) is a sensor which detects whether or not the measuring instrument (SS) is mounted in the measuring instrument accommodating unit (701).

6. The automatic analyzer according to claim 5, wherein the measuring instrument (SS) is a camera, an optical sensor, a linear image sensor, or a measuring instrument capable of measuring a length.

7. The automatic analyzer according to claim 1,

   wherein the plurality of processing units include a cleaning mechanism (W1-5) which cleans the rod-shaped member, and

   wherein the measuring instrument measures the cleaning liquid by the cleaning mechanism (W1-5).

8. The automatic analyzer according to claim 1, wherein the measuring instrument (SS) measures a distance between the stop position of the rod-shaped member and a reference plane of the automatic analyzer.

9. The automatic analyzer according to claim 1, wherein the measuring instrument (SS) has a lens and an image element and is capable of imaging the operation.

10. The automatic analyzer according to claim 7, wherein the measuring instrument measures the amount of the cleaning liquid of the cleaning mechanism.

11. The automatic analyzer according to claim 1, including an identification label for identifying the plurality of measuring instrument mounting units (BX1-5, 201).

12. The automatic analyzer according to claim 1, including a display unit which displays the measuring instrument mounting unit (BX1-5, 201) in which the measuring instrument should be mounted from among the plurality of measuring instrument mounting units (BX1-5, 201).

13. The automatic analyzer according to claim 9, including a background image plate arranged on the opposite side of the lens so as to sandwich an imaging target of the lens.

14. The automatic analyzer according to claim 13, wherein the background image plate is a positioning mark or a machine-readable text.


**Patentansprüche**

1. Automatischer Analysator, umfassend:

   eine Mehrzahl von Verarbeitungseinheiten, die analysenbezogene Vorgänge ausführen, wobei die Verarbeitungseinheiten ein stabförmiges Element aufweisen, das mit Flüssigkeit in Kontakt kommt;
   eine Mehrzahl von Messinstrument-Montageeinheiten (BX1-5, 201), die in jeder der Mehrzahl von Verarbeitungseinheiten angeordnet sind und dazu konfiguriert sind, die Montage eines Messinstruments (SS) zu ermöglichen, wobei das Messinstrument jeden der Vorgänge der Mehrzahl von Verarbeitungseinheiten misst; und
   eine Steuereinheit (11), die die Mehrzahl von Verarbeitungseinheiten steuert,
   **dadurch gekennzeichnet, dass** jede der Mehrzahl von Messinstrument-Montageeinheiten (BX1-5, 201) dazu konfiguriert ist, die Entfernung des Messinstruments (SS) zu ermöglichen, und dazu konfiguriert ist, die Montage des entfernten Messinstruments an einer anderen Messinstrument-Montageeinheit (BX1-5, 201) zu ermöglichen, wobei die Messinstrument-Montageeinheit (BX1-5, 201) so angeordnet ist, dass das Messinstrument (SS) in der Lage ist, eine Stoppposition des stabförmigen Elements zu messen.

2. Automatischer Analysator nach Anspruch 1, umfassend eine Anzeigeeinheit (13), die ein durch das Messinstrument (SS) erhaltenes Messergebnis des Vorgangs anzeigt.

3. Automatischer Analysator nach Anspruch 2, wobei die Steuereinheit (11) basierend auf dem Messergebnis bestimmt, ob der Vorgang ein vorbestimmtes Kriterium erfüllt oder nicht.

4. Automatischer Analysator nach Anspruch 3, wobei die Steuereinheit (11) den Vorgang der Verarbeitungseinheit basierend auf dem Ergebnis der Bestimmung ändert, ob der Vorgang ein vorbestimmtes Kriterium erfüllt oder nicht.

5. Automatische Analyseeinheit nach Anspruch 1, wobei jede der Mehrzahl von Messinstrument-Montageeinheiten (BX1-5) eine Messinstrument-Aufnahmeeinheit (701), einen Verriegelungsmechanismus (702), einen Messinstrument-Sensor (704) und ein Identifikationsetikett (705) umfasst, wobei die Messinstrument-Aufnahmeeinheit (701) ein Gehäuse ist, in dem das interne Messinstrument (SS) montiert werden kann, der Verriegelungsmechanismus (702) ein Mechanismus zum Fixieren des in der Messinstrument-Aufnahmeeinheit (701) montierten Messinstruments (SS) ist, der Messinstrument-Sensor (704) ein Sensor ist, der erkennt, ob das Messinstrument (SS) in der Messinstrument-Aufnahmeeinheit (701) montiert ist oder nicht.

6. Automatischer Analysator nach Anspruch 5, wobei das Messinstrument (SS) eine Kamera, ein optischer Sensor, ein linearer Bildsensor oder ein Messinstrument ist, das in der Lage ist, eine Länge zu messen.

7. Automatischer Analysator nach Anspruch 1, wobei die Mehrzahl von Verarbeitungseinheiten einen Reinigungsmechanismus (W1-5) umfasst, der das stabförmige Element reinigt, und wobei das Messinstrument die Reinigungsflüssigkeit durch den Reinigungsmechanismus (W1-5) misst.

8. Automatischer Analysator nach Anspruch 1, wobei das Messinstrument (SS) einen Abstand zwischen der Stoppposition des stabförmigen Elements und einer Referenzebene des automatischen Analysators misst.

9. Automatischer Analysator nach Anspruch 1, wobei das Messinstrument (SS) eine Linse und ein Bildelement aufweist und in der Lage ist, den Vorgang abzubilden.

10. Automatischer Analysator nach Anspruch 7, wobei das Messinstrument die Menge der Reinigungsflüssigkeit des Reinigungsmechanismus misst.

11. Automatischer Analysator nach Anspruch 1, einschließlich eines Identifikationsetiketts zur Identifizierung der Mehrzahl von Messinstrument-Montageeinheiten (BX1-5, 201).

12. Automatischer Analysator nach Anspruch 1, einschließlich einer Anzeigeeinheit, die die Messinstrument-Montageeinheit (BX1-5, 201) anzeigt, in der das Messinstrument aus der Mehrzahl von Messinstrument-Montageeinheiten (BX1-5, 201) montiert werden soll.

13. Automatischer Analysator nach Anspruch 9, einschließlich einer Hintergrundbildplatte, die auf der gegenüberliegenden Seite der Linse angeordnet ist, um ein Abbildungsziel der Linse einzuschließen.

14. Automatischer Analysator nach Anspruch 13, wobei die Hintergrundbildplatte eine Positionierungsmarkierung oder ein maschinenlesbarer Text ist.

**Revendications**

1. Analyseur automatique comprenant :

une pluralité d'unités de traitement qui exécutent des opérations se rapportant à une analyse, dans lequel les unités de traitement ont un élément en forme de tige qui vient en contact avec un liquide ;
une pluralité d'unités (BX1-5, 201) de montage d'instruments de mesure qui sont agencées dans chacune de la pluralité d'unités de traitement et configurées pour permettre qu'un instrument (SS) de mesure soit monté, ledit instrument de mesure mesurant chacune des opérations de la pluralité d'unités de traitement ; et
une unité (11) de commande qui commande la pluralité d'unités de traitement,
**caractérisé en ce que** chacune de la pluralité d'unités (BX1-5, 201) de montage d'instruments de mesure est configurée pour permettre que l'instrument (SS) de mesure soit déposé et configurée pour permettre que l'instrument de mesure déposé soit monté sur une autre unité (BX1-5, 201) de montage d'instrument de mesure, dans lequel l'unité (BX1-5, 201) de montage d'instrument de mesure est agencée de telle sorte que l'instrument (SS) de mesure est apte à mesurer une position d'arrêt de l'élément en forme de tige.

2. Analyseur automatique selon la revendication 1, incluant une unité (13) d'affichage qui affiche un résultat de mesure de l'opération obtenu par l'instrument (SS) de mesure.

3. Analyseur automatique selon la revendication 2, dans lequel l'unité (11) de commande détermine sur la base du résultat de mesure si l'opération est ou non à l'intérieur d'un critère prédéterminé.

4. Analyseur automatique selon la revendication 3, dans lequel l'unité (11) de commande change l'opération de l'unité de traitement, sur la base du résultat de détermination si l'opération est ou non à l'intérieur du critère prédéterminé.

5. Unité d'analyse automatique selon la revendication 1, dans lequel chacune de la pluralité d'unités (BX1-5) de montage d'instruments de mesure inclut une unité (701) de réception d'instrument de mesure, un mécanisme (702) de verrouillage, un capteur (704) d'instrument de mesure, et une étiquette (705) d'identification,
dans lequel l'unité (701) de réception d'instrument de mesure est un logement dans lequel l'instrument (SS) de mesure interne peut être monté, le mécanisme (702) de verrouillage est un mécanisme pour fixer l'instrument (SS) de mesure monté à l'intérieur de l'unité (701) de réception d'instrument de mesure, le capteur (704) d'instrument de mesure est un capteur qui détecte si l'instrument (SS) de mesure est ou non monté dans l'unité (701) de réception d'instrument de mesure.

6. Analyseur automatique selon la revendication 5, dans lequel l'instrument (SS) de mesure est une caméra, un capteur optique, un capteur linéaire d'images, ou un instrument de mesure apte à mesurer une longueur.

7. Analyseur automatique selon la revendication 1,

dans lequel la pluralité d'unités de traitement incluent un mécanisme (W1-5) de nettoyage qui nettoie l'élément en forme de tige, et
dans lequel l'instrument de mesure mesure le liquide de nettoyage par le mécanisme (W1-5) de nettoyage.

8. Analyseur automatique selon la revendication 1, dans lequel l'instrument (SS) de mesure mesure une distance entre la position d'arrêt de l'élément en forme de tige et un plan de référence de l'analyseur automatique.

9. Analyseur automatique selon la revendication 1, dans lequel l'instrument (SS) de mesure a un objectif et un élément d'image et est apte à imager l'opération.

10. Analyseur automatique selon la revendication 7, dans lequel l'instrument de mesure mesure la quantité du liquide de nettoyage du mécanisme de nettoyage.

11. Analyseur automatique selon la revendication 1, incluant une étiquette d'identification pour identifier la pluralité d'unités (BX1-5, 201) de montage d'instruments de mesure.

12. Analyseur automatique selon la revendication 1, incluant une unité d'affichage qui affiche l'unité (BX1-5, 201) de montage d'instrument de mesure dans laquelle l'instrument de mesure devrait être monté parmi la pluralité d'unités (BX1-5, 201) de montage d'instruments de mesure.

13. Analyseur automatique selon la revendication 9, incluant une plaque d'image de fond agencée sur le côté opposé de l'objectif de façon à prendre en sandwich une cible d'imagerie de l'objectif.

14. Analyseur automatique selon la revendication 13, dans lequel la plaque d'image de fond est une marque de positionnement ou un texte lisible par machine.

FIG. 1

# FIG. 2

# FIG. 3

# FIG. 4

# FIG. 5

# FIG. 6

# FIG. 7

# FIG. 8

NZ1

FP1

802

800

801

Z

606

X

# FIG. 9

NZ1

803

FP1

802

800

801

Z

606

X

# FIG. 10

# FIG. 11

# FIG. 12

START

START UP AUTOMATIC ADJUSTMENT TOOL — S100

DESIGNATE ADJUSTMENT POINT — S101

MOUNT MEASURING INSTRUMENT SS
IN MEASURING INSTRUMENT MOUNTING UNIT — S102

CONFIRM MOUNTING POSITION — S103

S104
IS MEASURING
INSTRUMENT SS MOUNTED IN
PREDETERMINED
POINT? — NO → OUTPUT ALARM — S105

YES

DISCHARGE CLEANING WATER — S106

PHOTOGRAPH BY MEASURING INSTRUMENT SS — S107

S108
IS CLEANING
POSITION WITHIN SPECIFICATION
RANGE? — NO → OUTPUT ALARM — S109

YES

S113
REMOVE MEASURING INSTRUMENT SS FROM
MEASURING INSTRUMENT MOUNTING UNIT

S110
IS AMOUNT
OF CLEANING WATER
EXCESSIVE? — YES → CLOSE VALVE OF
CLEANING WATER — S112

NO

OPEN VALVE OF
CLEANING WATER — S111

S114
ADJUSTMENT POINT i = n? — NO → i = i + 1 — S115

YES

CONFIRM STATE OF MEASURING INSTRUMENT SS — S116

S117
IS MEASURING
INSTRUMENT SS REMOVED FROM
MEASURING INSTRUMENT
MOUNTING UNIT? — NO → OUTPUT ALARM — S118

YES

CREATE ADJUSTMENT COMPLETION REPORT — S119

TERMINATE AUTOMATIC ADJUSTMENT TOOL — S120

END

# FIG. 13

# FIG. 14

910

ADJUSTMENT TOOL

911 — INFORMATION
    OPERATOR: ****
    DATA: 8/10/2019
    SERIAL: **-**
    POSITION: NO. **

913 — RESULT

    ADJUSTMENT OK (NG)

914 — COMMENT
OPEN THE VALVE TO ANTICLOCKWISE
DIRECTION FOR A HALF ROTATION, AND
PUSH THE OK BOTTOM.

PICTURE

912

OK

915

# FIG. 15

910A

ADJUSTMENT TOOL

911 — INFORMATION

OPERATOR: ****
DATA: 8/10/2019
SERIAL: **-**
POSITION: NO. **

913 — RESULT

ADJUSTMENT OK (NG)

914 — COMMENT

PICTURE

912

BEFORE       1/ x (PAGES)       NEXT

916

# FIG. 16

FP1   V1   EV1

800

SS

z

EV2   607   606   BX1

y

# FIG. 17

# FIG. 18

# FIG. 19

# FIG. 20

# FIG. 21

# FIG. 22

# FIG. 23

# FIG. 24

# FIG. 25

# FIG. 26

# FIG. 27

## FIG. 28

# FIG. 29

# FIG. 30

START

START UP AUTOMATIC ADJUSTMENT TOOL ～S100

DESIGNATE ADJUSTMENT POINT (n) ～S101

MOUNT SENSOR TO 201 (i) ～S102

CONFIRM MOUNTING POSITION ～S103

S104 — IS CAMERA MOUNTED IN PREDETERMINED POINT? → NO → OUTPUT ALARM — S105

YES

MOVE NOZZLE TO ASPIRATION/DISCHARGE POSITION ～S201

PHOTOGRAPH BY CAMERA ～S202

S203 — IS CAPTURED IMAGE IN xz-AXIS DIRECTION? → YES → S204 — IS xz-AXIS OF NOZZLE POSITION WITHIN SPECIFICATION? → NO

NO

YES

S206 — IS CAPTURED IMAGE IN xy-AXIS DIRECTION? → YES

NO

CHANGE PULSE IN y-AXIS DIRECTION ～S208

CHANGE OPERATION PULSE IN x-AXIS AND z-AXIS DIRECTIONS — S205

REMOVE CAMERA FROM SENSOR MOUNTING UNIT ～S209

S210 — ADJUSTMENT POINT i = n? → NO → S211 — i = i + 1

YES

CONFIRM STATE OF CAMERA ～S116

S117 — IS CAMERA REMOVED FROM SENSOR MOUNTING UNIT? → NO → OUTPUT ALARM — S118

YES

CREATE REPORT ～S119

TERMINATE AUTOMATIC ADJACENT TOOL ～S120

END

**REFERENCES CITED IN THE DESCRIPTION**

**Patent documents cited in the description**

- US 20140296089 A1

- JP 2017151002 A